# EUROPÄISCHE PATENTSCHRIFT

(11) **EP 2 176 117 B1**
(45) Veröffentlichungstag und Bekanntmachung des Hinweises auf die Patenterteilung: **16.03.2011**
(21) Anmeldenummer: 08786940.0
(22) Anmeldetag: 06.08.2008
(51) Int. Cl.: B62K 15/00, B62K 3/04, B62J 7/04, B62K 21/22

(54) **FALTRAD**
COLLAPSIBLE BICYCLE
VÉLO PLIABLE

(30) Priorität: 09.08.2007 DE 102007037648
(43) Veröffentlichungstag der Anmeldung: 21.04.2010
(73) Patentinhaber: Topeak, Inc., Taichung (TW)
(72) Erfinder: HÖRDUM, Martin, 50678 Köln (DE); BITSCH, Christian, 67373 Dudenhofen (DE)
(74) Vertreter: Viering, Jentschura & Partner
(86) Internationale Anmeldenummer: PCT/EP2008/060333
(87) Internationale Veröffentlichungsnummer: WO 2009/019285

(56) Entgegenhaltungen:
- WO-A-99/51485
- WO-A-03/016124
- DE-A1- 4 311 998
- DE-A1-102005 022 130
- US-A1- 2006 196 322
- US-A1- 2006 244 237

## Beschreibung

Die vorliegende Erfindung bezieht sich auf ein Faltrad.

An moderne Falträder werden eine Vielzahl von Anforderungen gestellt. Diese sind insbesondere ein günstiges Volumen des gefalteten Faltrads, eine hohe Rahmensteifigkeit sowie ein Faltmechanismus, welcher ein einfaches Falten des Faltrads ermöglicht.

Die derzeit aus dem Stand der Technik bekannten Falträder werden diesen Anforderungen nur in unzureichendem Maße gerecht.

Die WO 03/016124 offenbart ein Faltrad mit einem Rahmen, welcher in seiner Ebene faltbar ist, wobei der Rahmen aufweist: eine obere Rahmenstrebe mit einem faltradvorderseitigen Ende, an welchem eine Vorderradgabel zur Aufnahme eines Vorderrads gelagert ist; eine Sattelstrebe mit einem Ende zur Aufnahme eines Sattelrohrs; einen Hebel, welcher an einem faltradrückseitigen Ende der oberen Rahmenstrebe an einem ersten Anlenkpunkt angelenkt ist, wobei der Hebel bezogen auf die Sattelstrebe in einer Fahrstellung des Faltrads faltradvorderseitig angeordnet ist; und eine untere Rahmenstrebe, welche an dem faltradvorderseitigen Ende der oberen Rahmenstrebe an einem dritten Anlenkpunkt und an einem dem Ende zur Aufnahme der Sattelrohrs gegenüberliegenden Ende der Sattelstrebe an einem vierten Anlenkpunkt angelenkt ist.

Die US 2006/0244237 A offenbart ein Faltrad mit einem Rahmen, welcher in seiner Ebene faltbar ist, wobei der Rahmen aufweist: eine obere Rahmenstrebe mit einem faltradvorderseitigen Ende, an welchem eine Vorderradgabel zur Aufnahme eines Vorderrads gelagert ist; eine Sattelstrebe mit einem Ende zur Aufnahme eines Sattelrohrs; einen Hebel, welcher an einem faltradrückseitigen Ende der oberen Rahmenstrebe an einem ersten Anlenkpunkt angelenkt ist, wobei der Hebel bezogen auf die Sattelstrebe in einer Fahrstellung des Faltrads faltradvorderseitig angeordnet ist; und eine untere Rahmenstrebe, welche an dem faltradvorderseitigen Ende der oberen Rahmenstrebe an einem dritten Anlenkpunkt an einem vierten Anlenkpunkt angelenkt ist.

Es ist daher Aufgabe der vorliegenden Erfindung, ein verbessertes Faltrad bereitzustellen.

Erfindungsgemäß wird diese Aufgabe durch ein Faltrad mit den Merkmalen des Patentanspruchs 1 gelöst.

Demgemäß wird ein Faltrad mit einem Rahmen bereitgestellt, welcher in seiner Ebene faltbar ist, wobei der Rahmen aufweist: eine obere Rahmenstrebe mit einem faltradvorderseitigen Ende, an welchem eine Vorderradgabel zur Aufnahme eines Vorderrads gelagert ist; eine Sattelstrebe mit einem Ende zur Aufnahme eines Sattelrohrs; einen Hebel, welcher an einem faltradrückseitigen Ende der oberen Rahmenstrebe an einem ersten Anlenkpunkt und an dem Ende zur Aufnahme des Sattelrohrs der Sattelstrebe an einem zweiten Anlenkpunkt angelenkt ist, wobei der Hebel bezogen auf die Sattelstrebe in einer Fahrstellung des Faltrads faltradvorderseitig angeordnet ist; und eine untere Rahmenstrebe, welche an dem faltradvorderseitigen Ende der oberen Rahmenstrebe an einem dritten Anlenkpunkt und an einem dem Ende zur Aufnahme der Sattelstrebe gegenüberliegenden Ende der Sattelstrebe an einem vierten Anlenkpunkt angelenkt ist; wobei der erste, zweite, dritte und vierte Anlenkpunkt derart zueinander angeordnet sind, dass für ein Verbringen des Faltrads aus der Fahrstellung in eine Schiebestellung bzw. aus der Schiebestellung in die Fahrstellung das Ende der Sattelstrebe zur Aufnahme des Sattelrohrs auf die obere Rahmenstrebe hin bzw, von der oberen Rahmenstrebe weg verschwenkbar ist.

Die der vorliegenden Erfindung zugrundeliegende Idee besteht darin, dass sich ein sehr praktisches Volumen des Faltrads ergibt, wenn die Sattelstrebe mit dem Sattelrohr in etwa auf das obere Rahmenrohr verschwenkt wird.

In den Unteransprüchen finden sich vorteilhafte Ausgestaltungen und Verbesserungen der Erfindung.

Unter einem "Ende" ist vorliegend auch ein Endbereich zu verstehen.

Unter einer "Strebe" ist vorliegend ein längliches Verbindungselement zu verstehen. Vorzugsweise ist wenigstens eine der Streben als Rohr ausgebildet. Zusätzlich oder alternativ können die Streben auch an geeigneten Stellen gabelförmig ausgebildet sein.

Vorliegend umfasst die obere Rahmenstrebe auch ein etwaiges Vorderrohr, in welcher die Vorderrohrgabel, welche das Vorderrad aufnimmt, gelagert ist.

Gemäß einer weiter bevorzugten Ausführungsform weist das Faltrad weiterhin eine Hinterradgabel zur Aufnahme eines Hinterrads, welche an einem faltradrückseitigen Ende der unteren Rahmenstrebe an einem fünften Anlenkpunkt angelenkt ist, und eine Hinterradstrebe auf, welche an dem faltradrückseitigen Ende der oberen Rahmenstrebe an einem sechsten Anlenkpunkt und an der Hinterradgabel an einem siebten Anlenkpunkt angelenkt ist, wobei der erste, zweite, dritte, vierte, fünfte, sechste und siebte Anlenkpunkt derart zueinander angeordnet sind, dass das Hinterrad mittels des Verschwenkens des Endes der Sattelstrebe zur Aufnahme Sattelrohrs auf die obere Rahmenstrebe bzw. von dieser weg in Richtung Vorderrad bzw. von dem Vorderrad weg verschwenkt.

Vorteilhaft wird mittels der vorstehend beschriebenen Ausführungsform erreicht, dass allein durch Verschwenken des oberen Endes der Sattelrohrstrebe zur Aufnahme des Sattelrohrs auf die obere Rahmenstrebe gleichzeitig ein Verschwenken des Hinterrads hin zu dem Vorderrad erzielt wird. Das Faltrad befindet sich dann in einer Schiebestellung, d.h. das Vorder- und das Hinterrad befinden sich weiterhin in Bodenkontakt und sind dabei drehbar, während der Benutzer das Faltrad weiterhin mittels des Lenkers verschieben und auch steuern kann. Somit weist das erfindungsgemäße Faltrad bereits in der Schiebestellung eine sehr kompakte Gestalt auf, die es einem Benutzer erlaubt, das Faltrad in beengten Räumen, beispielsweise in der U-Bahn oder am Bahnsteig, mitzuführen, wobei der Benutzer das Faltrad schieben kann und nicht tragen muss, wie es bei den aus dem Stand der Technik bekannten Falträdern, wenn sich diese in einer gefalteten Stellung befinden, erforderlich ist.

Bei einer weiter bevorzugten Ausführungsform des erfindungsgemäßen Faltrads weist die untere Rahmenstrebe einen zur oberen Rahmenstrebe hin abgeknickten Endabschnitt auf, an dem die Sattelstrebe angelenkt ist. Der abgeknickte Endabschnitt ist vorzugsweise gabelförmig ausgebildet. Diese Ausführungsform ermöglicht ein Verschwenken der Sattelstrebe auf die obere Rahmenstrebe derart, dass die Sattelstrebe im Wesentlichen über ihre gesamte Länge parallel und anliegend zu der oberen Rahmenstrebe ausgerichtet ist.

Bei einer weiter bevorzugten Weiterbildung des erfindungsgemäßen Faltrads steht eine Nase von dem abgeknickten Endabschnitt ab, an welcher die Hinterradgabel angelenkt ist. Dies bedingt vorteilhaft, dass die Hinterradgabel weit in Richtung Faltradvorderseite verschwenkt werden kann, so dass das Hinterrad möglichst nah an dem Vorderrad zum Liegen kommt. Die Nase erlaubt dabei eine abschnittsweise, annähernd parallele Ausrichtung der Hinterradgabel relativ zu der unteren Rahmenstrebe.

Gemäß einer weiter bevorzugten Ausführungsform des erfindungsgemäßen Faltrads weist die Sattelstrebe einen gabelförmigen Abschnitt auf, durch welchen sich die obere Rahmenstrebe hindurch erstreckt.

In der Fahrstellung des Faltrads erstreckt sich die Sattelstrebe im Wesentlichen von unten nach oben (in vorliegender Anmeldung bezieht sich "lunten" und "oben" auf den Erdboden). Dabei kreuzt die Sattelstrebe die obere Rahmenstrebe, welche sich im Wesentlichen von der Faltradvorderseite zur Faltradrückseite hin erstreckt. Um eine hohe Rahmensteifigkeit zu gewährleisten, ist die Sattelstrebe daher mit einem gabelförmigen Abschnitt ausgebildet und umgreift somit die obere Rahmenstrebe. Wird das obere Ende der Rahmenstrebe zur Aufnahme des Sattelrohrs auf die obere Rahmenstrebe hinzu verschwenkt, so kann sich die Sattelstrebe ungehindert bezüglich der oberen Rahmenstrebe bewegen.

Bei einer weiter bevorzugten Weiterbildung des erfindungsgemäßen Faltrads weist die obere Rahmenstrebe eine Ausnehmung auf, in welcher der Hebel in der Fahrstellung des Faltrads versenkt ist. Dies ist optisch sehr vorteilhaft.

Bei einer weiter bevorzugten Ausführungsform des erfindungsgemäßen Faltrads weist die Sattelstrebe ein Auflageelement und die obere Rahmenstrebe ein Aufnahmeelement auf, welche in der Fahrstellung des Faltrads in einer Ebene, die sich im Wesentlichen senkrecht zur Sattelstrebe erstreckt, einen Formschluss bilden. Somit können in der Fahrstellung hohe Querlasten von einem an dem Sattelrohr befestigten Sattel, die sich insbesondere beim Fahren über unebenes Gelände ergeben, aufgenommen werden.

Zunächst einmal sollen das Auflage- und Aufnahmeelement vornehmlich dazu dienen, ein Verschwenken der Sattelstrebe mittels des Hebels relativ zu der oberen Rahmenstrebe nach unten, also dann, wenn der Sattel durch Aufsteigen eines Benutzers auf das Faltrad belastet wird, zu verhindern. Zusätzlich soll die Stabilisierung gemäß der vorstehenden Weiterbildung in Querrichtung vorgesehen sein.

Vorzugsweise ist das Auflageelement hohlkonusförmig und das Aufnahmeelement konusförmig ausgebildet, wobei diese in der Fahrstellung des Faltrads ineinandergreifen. Mittels dieser Weiterbildung des Auflageelements und Aufnahmeelements wird eine Kraftaufnahme in Querrichtung und auch die Aufnahme der von einer Benutzerperson ausgehenden Schwerkraft ermöglicht.

Gemäß einer weiter bevorzugten Ausführungsform des erfindungsgemäßen Faltrads weist dieses einen Gepäckträger und wenigstens eine Gepäckträgerstützstrebe auf, wobei der Gepäckträger an der Sattelstrebe an einem achten Anlenkpunkt und die Gepäckträgerstützstrebe an dem oberen Rahmenrohr an einem neunten Anlenkpunkt und an dem Gepäckträger an einem zehnten Anlenkpunkt angelenkt ist, wobei der achte, neunte und zehnte Anlenkpunkt derart zueinander angeordnet sind, dass der Gepäckträger in der Fahrstellung und in der Schiebestellung eine im Wesentlichen waagrechte Stellung aufweist.

Somit wird gewährleistet, dass von dem Gepäckträger gehaltenes Gepäck auf diesem verbleiben kann bzw. nicht von diesem abrutscht, während das Faltrad von der Fahrstellung in die Schiebestellung verbracht wird. Dies ist insbesondere bei an dem Gepäckträger fest montierten Taschen von großem Vorteil.

Gemäß einer weiter bevorzugten Weiterbildung des erfindungsgemäßen Faltrads ist die Sattelstrebe mittels Arretieren eines an der Sattelstrebe angebrachten Verbindungselements mit der oberen Rahmenstrebe für die Fahrstellung des Faltrads fest verbindbar und die Sattelstrebe mittels Lösen des Verbindungselements für ein Verschwenken der Sattelstrebe in einer ersten Schwenkrichtung relativ zu der oberen Rahmenstrebe in der Ebene des Rahmens für die Schiebestellung des Faltrads freigebbar. Das Verwendungselement sorgt in der arretierten Stellung dafür, dass ein Verschwenken der Sattelstrebe relativ zu der oberen Rahmenstrebe verhindert ist. Ein derartiges Verbindungselement ermöglicht es auf einfache weise, den in der Fahrstellung starren Rahmen für die Schiebestellung in sich faltbar zu machen.

Gemäß einer weiter bevorzugten Weiterbildung des erfindungsgemäßen Faltrads weist das Verbindungselement einen Griffhebel, welcher an der Sattelstrebe angelenkt ist, und einen sich an den Griffhebel anschließenden Haken auf, wobei der Haken zum Arretieren des Verbindungselements einen an der oberen Rahmenstrebe angebrachten Zapfen mittels Verschwenkens des Hakens in einer zweiten Schwenkrichtung hintergreift und den Zapfen zum Lösen des Verbindungselements mittels Verschwenken des Hakens in der ersten Schwenkrichtung freigibt. Ein derart ausgebildetes verbindungselement erlaubt es auf konstruktiv einfache Weise, die obere Rahmenstrebe relativ zu der Sattelstrebe fest zu verspannen, d.h., dass die obere Rahmenstrebe die untere Rahmenstrebe und die Sattelstrebe dann ein starres Dreieck bilden. Ferner ergibt sich vorteilhaft, dass, wenn ein Benutzer den Griffhebel zum Lösen des Verbindungselements betätigt, d.h. diesen in der ersten Schwenkrichtung verschwenkt, der Haken zunächst aus seinem Eingriff mit dem zapfen kommt und bei einer weiteren Betätigung des Griffhebels durch den Benutzer in der ersten Schwenkrichtung die Sattelstrebe in der ersten Schwenkrichtung verschwenkt, d.h. das Ende der Sattelstrebe zur Aufnahme des Sattelrohrs verschwenkt hin zu dem oberen Rahmenrohr. Damit ergibt sich, dass lediglich eine Handhabungsbewegung seitens des Benutzers erforderlich ist - nachfolgend auch als "Ein-Schritt" Betätigung bezeichnet -, um das Faltrad von der Fahrstellung in die Schiebestellung zu verbringen. Beispielsweise ist ein Umgreifen der Benutzerperson nicht erforderlich.

Bei einer weiter bevorzugten Weiterbildung des erfindungsgemäßen Faltrads bilden der Griffhebel, der Haken und der zapfen zusammen einen Übertotpunktmechanismus aus. Damit wird ein selbständiges Lösen des Verbindungselements in der arretierten Stellung sicher verhindert.

Bei einer weiter bevorzugten Weiterbildung des erfindungsgemäßen Faltrads ist eine Feder vorgesehen, die den Haken in der ersten Schwenkrichtung vorspannt. Dies bedingt vorteilhaft, dass, wenn die Sattelstrebe entgegen der ersten Schwenkrichtung zum Verbringen des Faltrads aus der Schiebestellung in die Fahrstellung verschwenkt wird, der Haken derart positioniert ist, dass er lediglich mit seiner Spitze gegen den Zapfen stößt, diese dann über den zapfen gleitet und diesen dann hintergreift, und die Sattelstrebe somit gegen ein ungewolltes Verschwenken zurück in die Schiebestellung gesichert ist. Damit wird eine Handhabung des Faltrads noch weiter vereinfacht.

Gemäß einer weiter bevorzugten Weiterbildung des erfindungsgemäßen Faltrads weist die Sattelstrebe einen Anschlag auf, an welchen das gelöste Verbindungselement in der dritten Schwenkrichtung anschlägt. Eine Benutzerperson, die, nachdem das Verbindungselement gelöst ist, den Griffhebel zum verbringen des Faltrads von der Fahrstellung in die Schiebestellung betätigt, erfährt es als ergonomisch günstig, wenn sie nicht an dem Griffhebel in im Wesentlichen dessen Längsrichtung ziehen muss, um die Sattelstrebe bezüglich der Rahmenstrebe zu verschwenken. Dies wäre ohne Anschlag der Fall, da eine Verschwenkbewegung des Verbindungselements nicht begrenzt wäre und somit kein Drehmoment auf die Sattelstrebe um diese zu Verschwenken aufbringbar wäre. Statt dessen ermöglicht es der Anschlag der Benutzerperson eine Kraft im Wesentlichen quer zur Längsrichtung des Griffhebel auf diesen aufzubringen, um so die Sattelstrebe relativ zu der oberen Rahmenstrebe zu verschwenken. Der Griffhebel kann also wie beispielsweise ein Schraubenschlüssel betätigt werden.

Bei einer weiter bevorzugten Weiterbildung des erfindungsgemäßen Faltrads ist dieses mit einer Lenkervorrichtung vorgesehen, welche eine Befestigungseinrichtung, mittels welcher die Lenkervorrichtung an der vorderradgabel befestigt ist, und zwei Lenkerrohre aufweist, welche jeweils an der Befestigungseinrichtung zwischen der Fahrstellung und einer ersten Verstaustellung des Faltrads oder zwischen der Schiebestellung und einer zweiten Verstaustellung des Faltrads mittels eines Drehgelenks verschwenkbar angebracht sind.

Demnach weist das Faltrad vorzugsweise vier Stellungen auf: eine Fahrstellung, eine Schiebestellung, eine erste Verstaustellung und eine zweite Verstaustellung.

In der Fahrstellung und in der Schiebestellung befinden sich die Lenkerrohre in einer bezüglich des Rahmens ausgeklappten Stellung.

In der ersten Verstaustellung des Faltrads sind die Lenkerrohre an den nicht-gefalteten Rahmen des Faltrads geklappt, und es wird somit ein günstiges Volumen für das Faltrad erzielt.

In der zweiten Verstaustellung sind die Lenkerrohre an den gefalteten Rahmen des Faltrads geklappt, und es wird somit ein noch günstigeres Volumen für das Faltrad erzielt.

In der ersten und zweiten Verstaustellung befinden sich die Lenkerrohre demnach in einer an den Rahmen angeklappten Stellung.

Bei einer weiter bevorzugten Ausführungsform des erfindungsgemäßen Faltrads weist jedes der Drehgelenke eine an dem Lenkerrohr angebrachte Lagerhälfte, eine an der Befestigungseinrichtung angebrachte Lagerhälfte und einen diese lagernden Gelenkzapfen auf, wobei die Lagerhälften formschlüssig und/oder reibschlüssig für die Fahrstellung, Schiebestellung, erste und/oder zweite Verstaustellung miteinander koppelbar sind. Der Gelenkzapfen erstreckt sich dabei vorzugsweise durch Bohrungen in den zwei Lagerhälften, so dass diese relativ zueinander verschwenkbar sind. Mittels der vorstehend beschriebenen Ausführungsform ist es auf sehr einfache Weise möglich, die Lenkerrohre in der ausgeklappten oder angeklappten Stellung anzuordnen und diese dort gegen ein Verschwenken relativ zu der Befestigungseinrichtung zu sichern.

Bei einer weiter bevorzugten Weiterbildung des erfindungsgemäßen Faltrads ist ein Schnellspanner vorgesehen, welcher den Gelenkzapfen aufweist und mittels welchem die Lagerhälften aneinander anpressbar sind. Damit ist es möglich, eine Verstellung der Lenkrohre von der ausgeklappten in die angeklappten Stellung, oder umgekehrt, sehr schnell vorzunehmen, da sich Schnellspanner sehr schnell feststellen und lösen lassen. Der Schnellspanner verspannt die zwei Lagerhälften form- und/oder reibschlüssig zueinander.

Gemäß einer weiter bevorzugten Ausführungsform des erfindungsgemäßen Faltrads weisen die Lagerhälften korrespondierende Aufnahme- und Eingriffselemente auf. Die Aufnahme- und Eingriffselemente greifen in der ausgeklappten oder angeklappten Stellung ineinander und sorgen so für eine sichere Arretierung einer Schwenkbewegung der Lenkerrohre relativ zu der Befestigungseinrichtung. Außerdem lassen sich mittels der Aufnahme- und Eingriffselemente bestimmte Lenkerrohrstellungen für die ausgeklappte und angeklappte Stellung der Lenkerrohre vordefinieren.

Bei einer weiter bevorzugten Weiterbildung des erfindungsgemäßen Faltrads sind die an den Lenkerrohren angebrachten Lagerhälften mittels eines Kardangelenks miteinander gekoppelt. Das Kardangelenk sorgt für eine symmetrische Ausrichtung der Lenkerrohre bezogen auf die Befestigungseinrichtung bzw. den Rahmen des Fahrrads. Weiterhin ermöglicht das Kardangelenk, dass eine Benutzerperson zum Verbringen des Faltrads von der Fahrstellung bzw. der Schiebestellung in die Verstaustellung lediglich eines des Lenkerrohre betätigen muss, um damit gleichzeitig auch das andere Lenkerrohr in die verstaustellung oder auch umgekehrt von der Verstaustellung in die Fahrstellung bzw. Schiebestellung zu verbringen.

Gemäß einer weiter bevorzugten Ausführungsform des erfindungsgemäßen Faltrads erstrecken sich Lenkergriffe der Lenkerrohre in der Fahrstellung im Wesentlichen von dem Rahmen weg und senkrecht zur Ebene des Rahmens und in der Verstaustellung im Wesentlichen zu dem Rahmen hin und in der Ebene des Rahmens. Damit ergibt sich eine für den Benutzer sehr angenehme Fahrposition und ein sehr günstiges Volumen des Faltrads in der Verstaustellung.

Gemäß einer weiter bevorzugten Ausführungsform des erfindungsgemäßen Faltrads weist dieses einen Ständerhalter, an welchem ein Ständer zwischen einer ausgeklappten Stellung für ein Abstützen des Faltrads und einer eingeklappten Stellung für ein Fahren mit dem Faltrad verschwenkbar angebracht ist, und eine Ständerstrebe aufweist, wobei der Ständerhalter an der Hinterradgabel an einem elften Anlenkpunkt und die Ständerstrebe an dem unteren Ende der Sattelstrebe an einem zwölften Anlenkpunkt und an dem Ständerhalter an einem dreizehnten Anlenkpunkt angelenkt ist, wobei der elfte, zwölfte und dreizehnte Anlenkpunkt derart zu einander angeordnet sind, dass der Ständer beim Verbringen des Faltrads zwischen der Fahrstellung und der Schiebestellung in der ausgeklappten Stellung verbleibt. Damit kann das Faltrad sowohl in der Fahrstellung als auch in der Schiebestellung mittels des Ständers abgestellt werden, was den Bedienkomfort des Faltrads noch weiter erhöht.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: in einer Seitenansicht ein Faltrad in einer Fahrstellung gemäß einem Ausführungsbeispiel der vorliegenden Erfindung;
- Fig. 2: das Faltrad aus Fig. 1 in einer perspektivischen Ansicht schräg von hinten gesehen;
- Fig. 3: das Faltrad aus Fig. 1 in einer Stellung zwi- schen der Fahrstellung und einer Schiebestel- lung;
- Fig. 4: das Faltrad aus Fig. 1 in der Schiebestellung;
- Fig. 5: das Faltrad aus Fig. 1 in einer Verstaustellung;
- Fig. 6: in einer perspektivischen Ansicht von schräg vorne den Rahmen des Faltrads aus Fig. 1;
- Fig. 7: eine vergrößerte Schnittansicht A aus Fig. 1, wobei in der Rahmenebene durch eine Sattelstrebe und ein oberes Rahmenrohr des Rahmens geschnit- ten worden ist, wobei das Verschlusselement ar- retiert ist;
- Fig. 7a: die Ansicht aus Fig. 7, jedoch gemäß einem wei- teren Ausführungsbeispiel der vorliegenden Er- findung.
- Fig. 8: eine perspektivische Ansicht B aus Fig. 7 von schräg hinten, wobei durch die Sattelstrebe ge- schnitten dargestellt ist;
- Fig. 9: die Ansicht aus Fig. 7, wobei das Verschlussele- ment gelöst ist;
- Fig. 9a: die Ansicht aus Fig. 7a, wobei das Verschluss- element gelöst ist;
- Fig. 10: eine Ansicht C aus Fig. 3, wobei die obere Rah- menstrebe, die Sattelstrebe und die untere Rah- menstrebe (teilweise) geschnitten dargestellt sind;
- Fig. 11: eine vergrößerte Ansicht D aus Fig. 4, wobei die obere Rahmenstrebe, die Sattelstrebe und die un- tere Rahmenstrebe (teilweise) geschnitten darge- stellt sind;
- Fig. 12: eine rückwärtige Ansicht aus Fig. 11, wobei die Bauteile ebenfalls geschnitten dargestellt sind;
- Fig. 13: in einer perspektivischen Ansicht die Lenkervor- richtung aus Fig. 5, also im angeklappte Zu- stand;
- Fig. 14: eine vergrößerte Ansicht E aus Fig. 13, wobei der linke Schnellspanner gelöst ist;
- Fig. 15: die Ansicht aus Fig. 14, wobei die Lenkervor- richtung ohne die Befestigungseinrichtung darge- stellt ist;
- Fig. 16: das Faltrad aus Fig. 1 in der Fahrstellung mit einem Ständer, welcher das Faltrad abstützt; und
- Fig. 17: die Ansicht aus Fig. 16, wobei das Faltrad in der Schiebestellung ist und der Ständer das Faltrad abstützt.

In den Figuren bezeichnen gleiche Bezugszeichen gleiche oder funktionsgleiche Komponenten. Der Gepäckträger ist der Übersichtlichkeit halber in einigen Figuren nicht dargestellt worden.

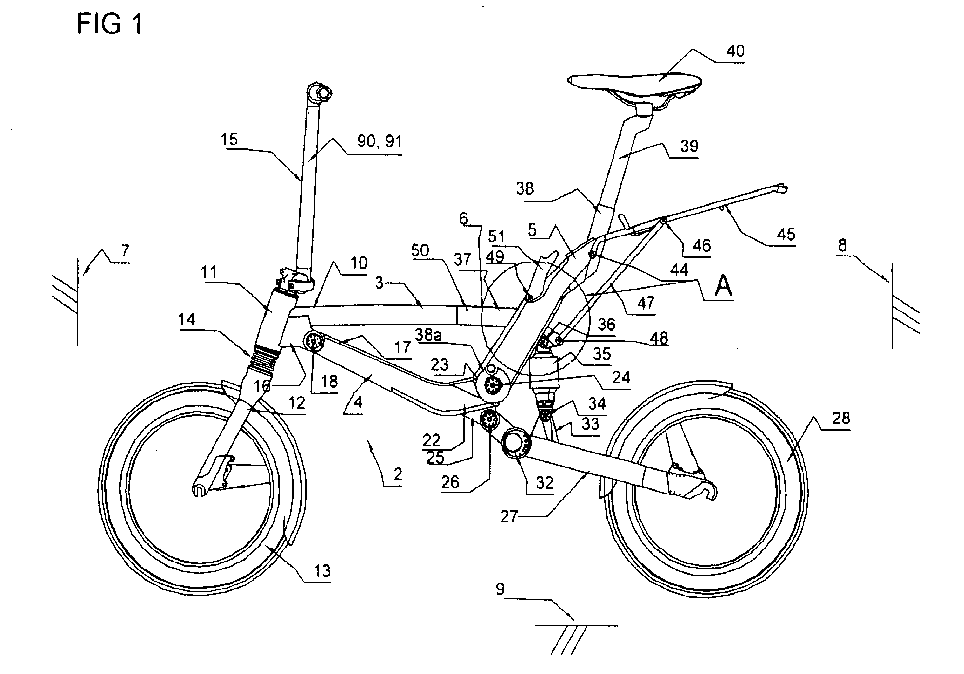

Fig. 1 zeigt ein Faltrad 1 gemäß einem Ausführungsbeispiel der vorliegenden Erfindung.

Das Faltrad 1 weist einen Rahmen 2 auf, welcher in seiner Ebene, also in der Papierebene der Fig. 1, faltbar ist.

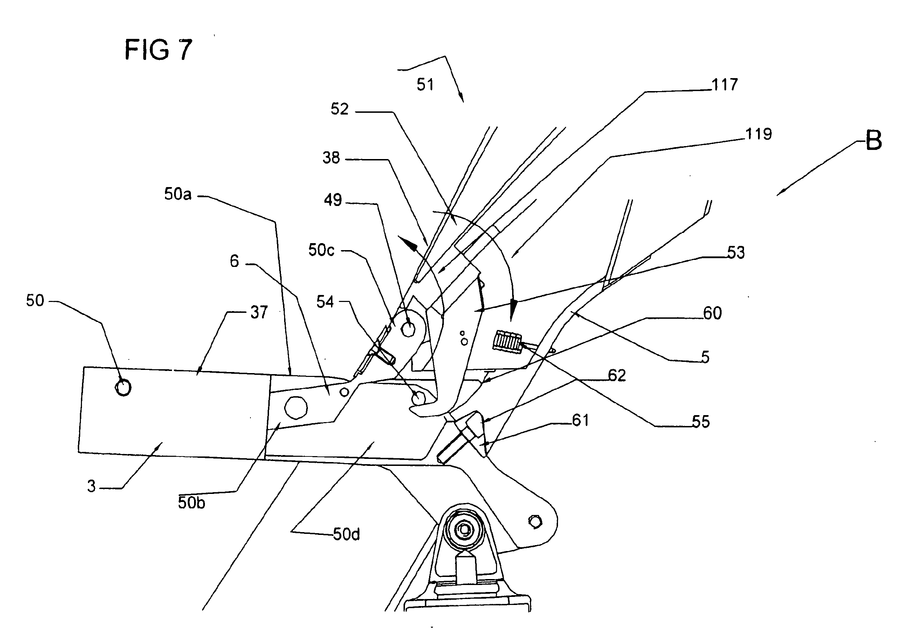

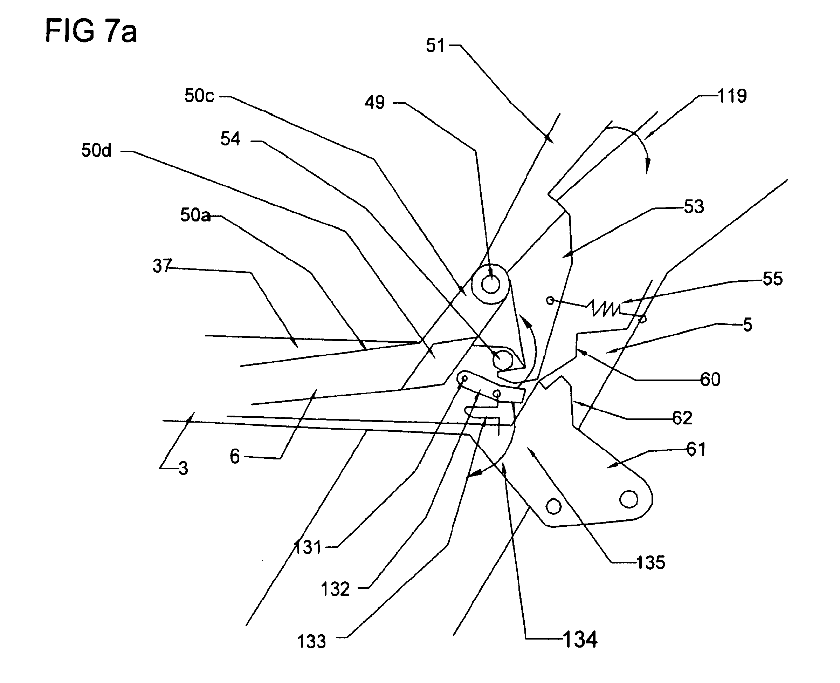

Der Rahmen 2 setzt sich aus einer oberen Rahmenstrebe 3, einer unteren Rahmenstrebe 4, einer Sattelstrebe 5 und einem Hebel 6 (s. hierzu Fig. 7) zusammen.

Die Faltradvorderseite und die Faltradrückseite sind zur besseren Erklärung mit den Bezugszeichen 7 bzw. 8 versehen worden. Der Erdboden, auf den sich nachfolgend die Begriffe "unten" und "oben" beziehen, ist mit dem Bezugszeichen 9 bezeichnet.

Die obere Rahmenstrebe 3 weist an ihrem faltradvorderseitigen Ende 10 ein Vorderrohr 11 auf, in welchem eine Vorderradgabel 12, die ein Vorderrad 13 aufnimmt, für ein Lenken des Faltrads drehbar gelagert ist.

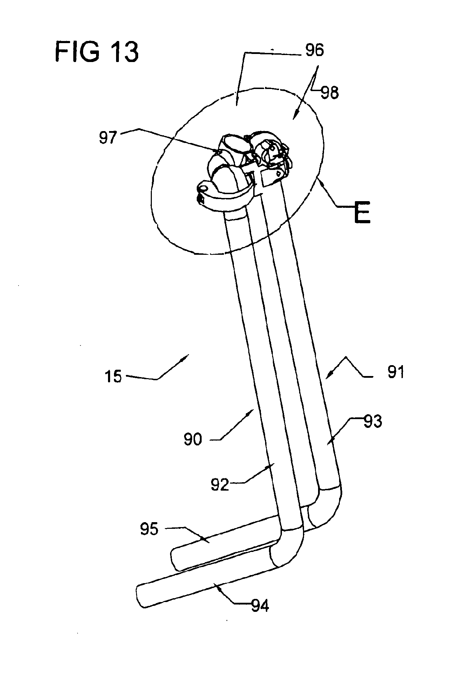

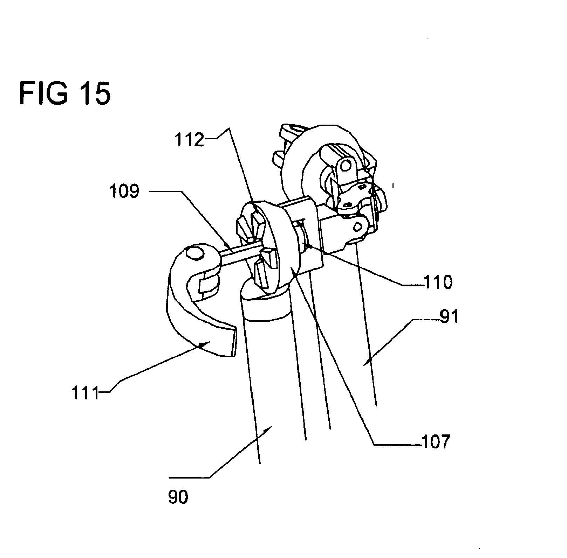

Die Vorderradgabel 12 weist vorzugsweise ein Dämpferelement 14 auf, welches Stöße in Längsrichtung der vorderradgabel 12 aufzunehmen vermag. An der Vorderradgabel 12 ist oberhalb des Vorderrohrs 11 eine Lenkervorrichtung 15 lösbar befestigt, welche im Zusammenhang mit den Fig. 13 bis 15 noch näher erläutert wird.

An das Vorderrohr 11 und die obere Rahmenstrebe 3 ist ein Winkel 16 angeschweißt. An dem Winkel 16 ist ein faltradvorderseitiges Ende 17 der unteren Rahmenstrebe 4 an einem Anlenkpunkt 18 angelenkt.

Gegenüberliegend dem Ende 17 weist die untere Rahmenstrebe 4 faltradrückseitig einen zu der oberen Rahmenstrebe 3 hin abgeknickten Endabschnitt 22 auf. Der Endabschnitt 22 trägt an seinem Ende 23 einen Anlenkpunkt 24, mittels welchem die Sattelstrebe 5 an der unteren Rahmenstrebe 4 angelenkt ist. In dem Abschnitt 22 ist die untere Rahmenstrebe 4 vorzugsweise gabelförmig ausgebildet, um ein Aufnehmen der oberen Rahmenstrebe 3 in der noch später näher erläuterten Schiebestellung zu ermöglichen. An dem Endabschnitt 22 ist vorzugsweise eine Nase 25 angeformt, welche einen Anlenkpunkt 26 trägt, mittels welchem eine Hintergabel 27 an der unteren Rahmenstrebe 4 angelenkt ist.

Die Hinterradgabel 27 nimmt ein Hinterrad 28 auf. Die Hinterradgabel 27 weist eine Aufnahme 32 für ein Tretlager (nicht dargestellt) für den Antrieb des Faltrads 1. Ferner ist an der Hinterradgabel 27 eine Nase 33 angeformt, welche einen Anlenkpunkt 34 trägt, mittels welchem eine als Dämpferelement ausgebildete Hinterradstrebe 35 an ihrem einen Ende angelenkt ist. An ihrem anderen Ende ist die Hinterradstrebe 35 mittels eines Anlenkpunkts 36 an einem faltradrückseitigen Ende 37 der oberen Rahmenstrebe 3 angelenkt.

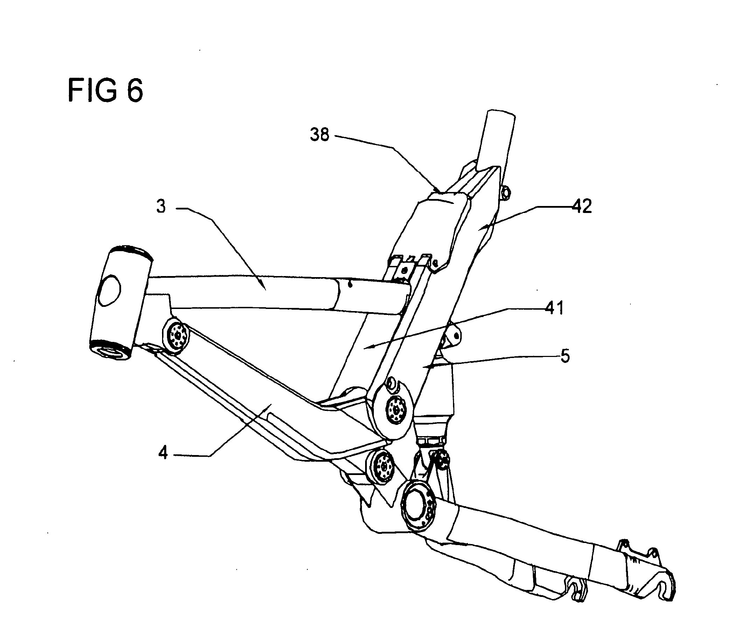

Die Sattelstrebe 5 weist an ihrem einen Ende 38a den Anlenkpunkt 24, an welchem sie an der unteren Rahmenstrebe 4 angelenkt ist, auf und trägt an ihrem anderen Ende 38 ein Sattelrohr 39, welches an seinem freien Ende einen Sattel 40 trägt. Die Sattelstrebe 5 weist weiterhin einen gabelförmigen Abschnitt 41 auf, durch welchen sich die obere Rahmenstrebe 3 in der in Fig. 6 gezeigten Stellung des Rahmens hindurch erstreckt, wobei sich ein stielförmiger Abschnitt 42 an den gabelförmigen Abschnitt 41 anschließt, der das Sattelrohr 39 trägt.

Weiterhin weist die Sattelstrebe 5 an ihrem Ende 38 einen Anlenkpunkt 44 auf, mittels welchem ein Gepäckträger 45 an seinem einen Ende an der Sattelstrebe 5 angelenkt ist. Beabstandet von dem Anlenkpunkt 44 ist an dem Gepäckträger 45 ein weiterer Anlenkpunkt 46 vorgesehen, an welchem eine Gepäckträgerstützstrebe 47 an ihrem einen Ende angelenkt ist. An ihrem anderen Ende ist die Gepäckträgerstützstrebe 47 an dem Ende 37 der oberen Rahmenstrebe 3 mittels eines Anlenkpunkts 48 angelenkt.

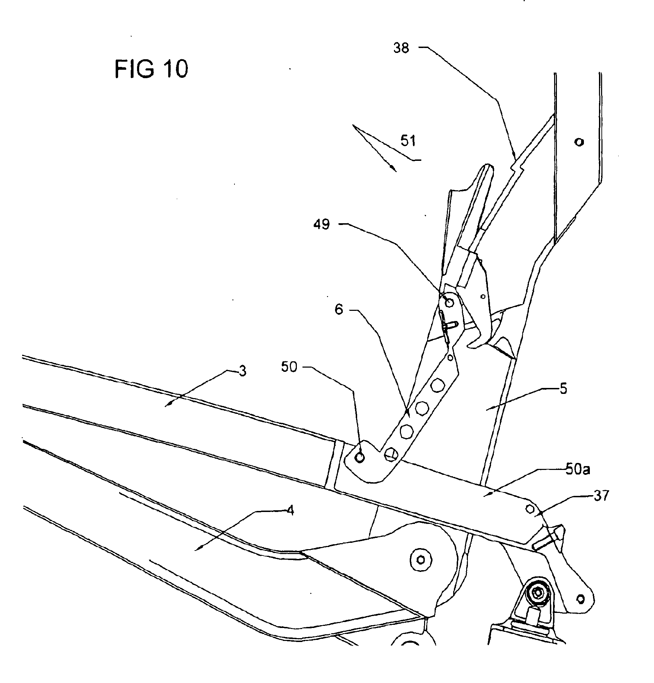

Wie aus Fig. 7 und Fig. 10 zu erkennen ist, ist der Hebel 6 an einem Anlenkpunkt 49 an dem Ende 38 der Sattelstrebe 5 und mittels eines Anlenkpunkts 50 an dem Ende 37 der oberen Rahmenstrebe 3 angelenkt. In der in Fig. 7 dargestellten Stellung ist der Hebel 6 in einer Ausnehmung 50a in dem Ende 37 der oberen Rahmenstrebe 3 teilweise versenkt angeordnet. Der Hebel 6 setzt sich aus einem langen Abschnitt 50b, welcher den Anlenkpunkt 50 aufweist und einem kurzen Abschnitt 50c, welcher den Anlenkpunkt 49 aufweist, zusammen. Der kurze Abschnitt 50c ist gegenüber dem langen Abschnitt 50b nach oben hin in einem Bereich mit einer Ausnehmung 50d abgeknickt vorgesehen.

Die Anlenkpunkte 18, 24, 26, 34, 36, 44, 46, 48, 49, 50, 127, 128, 129, 131, 137 sind vorzugsweise als Drehgelenke ausgebildet und weisen alle eine Drehachse im Wesentlichen senkrecht zur Papierebene bzw. senkrecht zur Ebene des Rahmens 2 auf.

An dem Anlenkpunkt 49 ist ein Verbindungselement 51 angelenkt. Das Verbindungselement 51 könnte auch an einer anderen Stelle der Sattelstrebe 5 angelenkt sein, jedoch ergibt sich somit eine Reduzierung von Bauteilen.

Das Verbindungselement 51, siehe dazu insb. Fig. 7, weist einen Griffhebel 52 auf, welcher auch den Anlenkpunkt 49 besitzt. An dem Griffhebel 52 ist ein Haken 53 befestigt. Der Haken 53 ist zum Hintergreifen eines Zapfens 54, welcher an dem Ende 37 der oberen Rahmenstrebe 3 angeformt ist, in der verriegelten Stellung des Verbindungselements 51 ausgebildet.

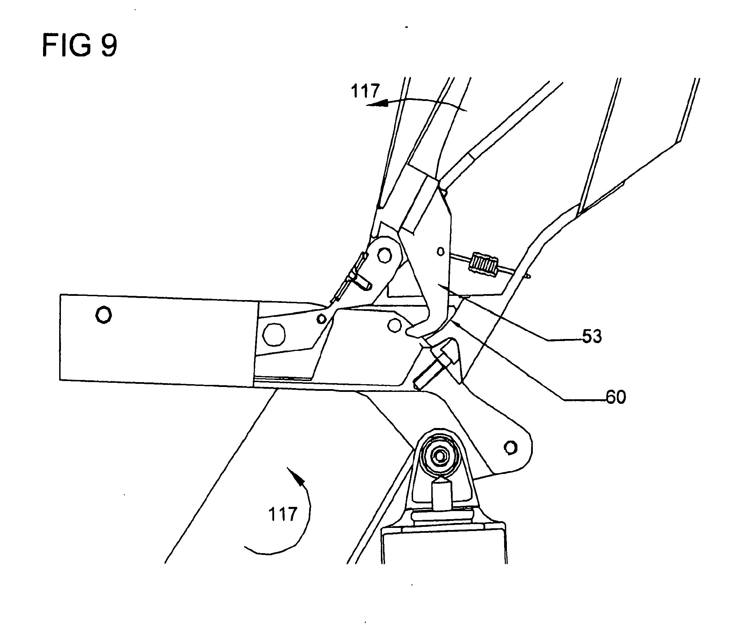

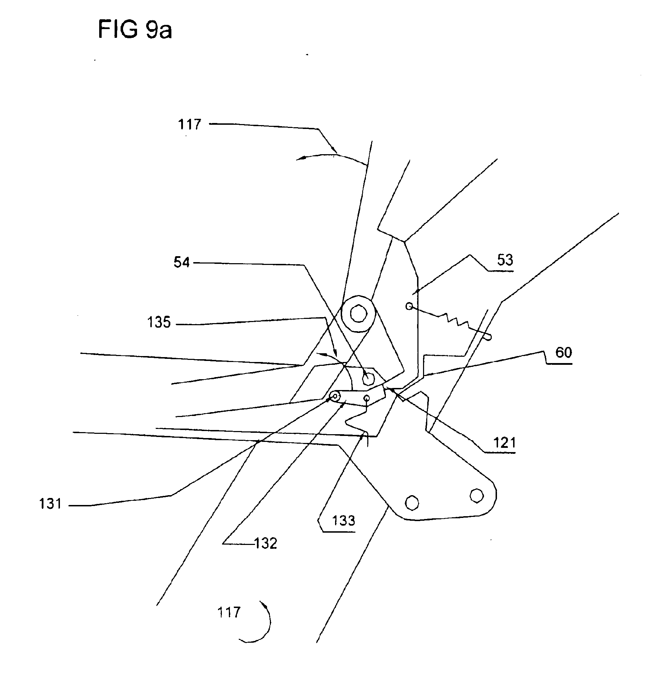

Weiterhin ist eine Zugfeder 55 vorgesehen, welche an ihrem einen Ende in den Haken 53 eingreift und an ihrem anderen Ende faltradrückseitig bezüglich des Hakens 53 an der Sattelstrebe 5 befestigt ist. Die Sattelstrebe 5 weist einen Anschlag 60 für den Haken 53 auf, nachdem dieser den Zapfen 54 freigegeben hat (dies ist aus Fig. 9 ersichtlich).

Der Griffhebel 52, der Haken 53 und der Zapfen 54 wirken zusammen als Übertotpunktmechanismus, so dass ein selbständiges Lösen des Hakens 53 von dem Zapfen 54 verhindert ist.

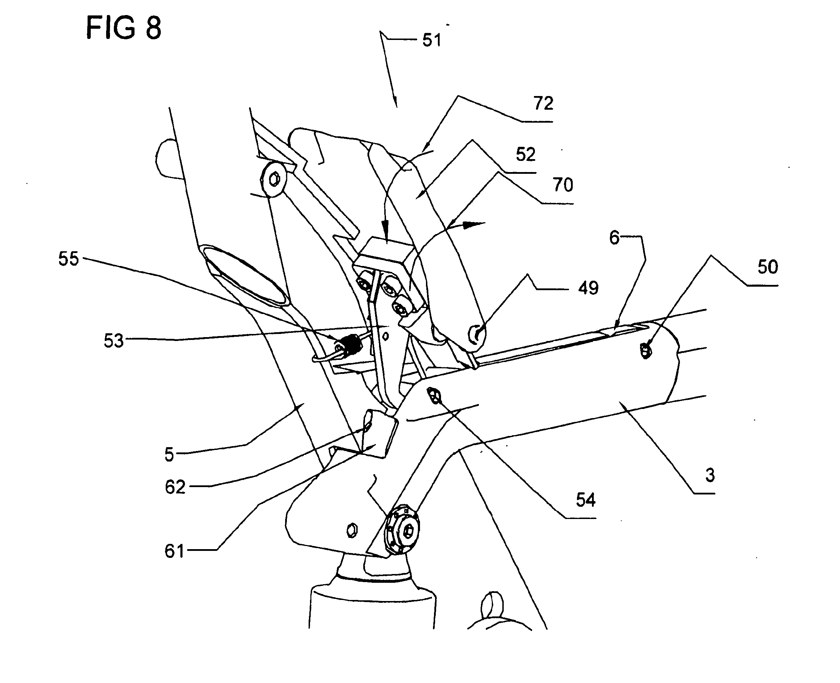

Das Ende 37 der oberen Rahmenstrebe 3 weist ein vorzugsweise im Wesentlichen pyramidenfömiges (dargestellt in Fig. 8) oder konusförmiges (nicht dargestellt) Aufnahmeelement 61 auf, welches zum Eingreifen in ein hohlpyramidenförmiges (dargestellt in Fig. 8) bzw. hohlkonusförmiges (nicht dargestellt) Auflageelement 62, das an dem Ende 38 der Sattelstrebe 5 vorgesehen ist, ausgebildet ist. Unter "konusförmig" soll kegel- und kegelstumpfförmig bzw. unter "hohlkonusförmig" hohlkegel- und hohlkegelstumpfförmig subsumiert sein.

In den Fig. 7a und 9a ist ein weiteres Ausführungsbeispiel der Erfindung dargestellt.

Das weitere Ausführungsbeispiel unterscheidet sich wie folgt von dem Ausführungsbeispiel gemäß den Fig. 7 und 9:

Ein Sperrhebel 132 ist in einem Anlenkpunkt 131 an der oberen Rahmenstrebe 3 angelenkt. Eine vorzugsweise als Druckfeder ausgebildete Feder 133 ist an ihrem einen Ende an dem oberen Rahmenrohr 3 und an ihrem anderen Ende an dem Sperrhebel 132 befestigt. In der in Fig. 7a dargestellten Stellung ist der Sperrhebel 132 in die Schwenkrichtung 135 vorgespannt und liegt daher gegen den Haken 53 an. In Fig. 9a liegt die Spitze 121 des Hakens 53 gegen den Sperrhebel 132 an. Die Feder 133 ist dazu vorgesehen, den Sperrhebel 132 in den Weg der spitze 121 zu bewegen.

Auf die Funktionsweise soll an späterer Stelle eingegangen werden.

Anhand der Fig. 13 bis 15 soll im Folgenden der Aufbau der Lenkervorrichtung 15 näher erläutert werden.

Die Lenkervorrichtung 15 weist zwei im Wesentlichen L-förmige Lenkerrohre 90, 91 auf, welche sich jeweils aus einem langen Abschnitt 92, 93 und einem zu diesem abgewinkelten, kurzen als Griff 94 bzw. 95 ausgebildeten Abschnitt zusammensetzen. Die Griffe 94, 95 dienen zum Lenken des Faltrads 1.

Die zwei Lenkerrohre 90, 91 sind jeweils an einer Befestigungseinrichtung 96 mittels Drehgelenken 97, 98 verschwenkbar angebracht. Mittels der Befestigungseinrichtung 96 ist die Lenkervorrichtung 15 an der Vordergabel 12 oberhalb des Vorderrohrs 11 (siehe Fig. 1) lösbar befestigbar.

Die Befestigungseinrichtung 96 weist Arme 102, 103 auf, welche an einer Rohrklemme 104 zum Klemmen der Vorderradgabel 12 seitlich angeformt sind und sich zu der Faltradrückseite 8 hin krümmen. An ihren Enden weisen die Arme 102, 103 jeweils eine vorzugsweise halbkugelförmige Lagerhälften 105, 106 auf, die mit den jeweiligen Armen 102, 103 fest verbunden sind.

Gegenüberliegend den Lagerhälften 105, 106 sind Lagerhälften 107 bzw. 108 angeordnet, welche an den Lenkerrohren 90 bzw. 91 fest angebracht sind.

Die Drehgelenke 97, 98 sind identisch aufgebaut, deshalb wird im Folgenden der Aufbau eines solchen Drehgelenks lediglich beispielhaft anhand des Drehgelenks 97 näher erläutert. Durch eine nicht näher dargestellte Bohrung erstreckt sich in den Lagerhälften 105, 107 ein Gelenkzapfen 109, welcher an seinem einen Ende einen Kopf 110 aufweist, der die Lagerhälfte 107 hintergreift. An dem anderen Ende ist an dem Gelenkzapfen 109 ein exzentrischer Spannhebel 111 angelenkt. Der Gelenkzapfen 109 bildet zusammen mit dem Spannhebel 111 einen allgemein bekannten "Schnellspanner" aus. Der Gelenkzapfen 109 ist schräg zu einer Senkrechten auf die Ebene des Rahmens 2 ausgerichtet.

Die Lagerhälften 107 und 108 sind über ein Kardangelenk 115 gelenkig gekoppelt. Eine Drehbewegung einer der Lagerhälften 107 oder 108 um den Gelenkzapfen 109 führt damit direkt auch zu einer Drehbewegung der jeweils anderen Lagerhälfte 108 bzw. 107.

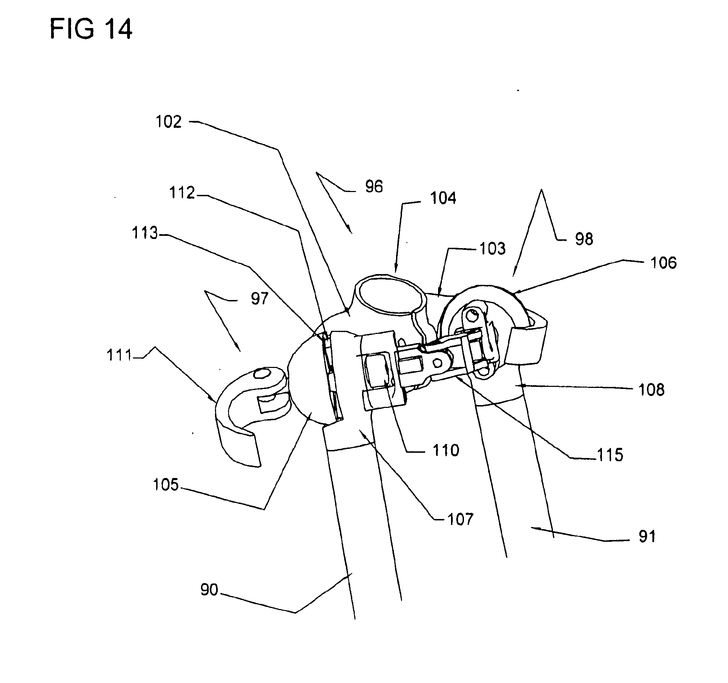

Mittels Schließen des Spannhebels 111 werden die Lagerhälften 105 und 107 bzw. 106 und 108 gegeneinandergepresst, so dass es zu einem Reibschluss und/oder Formschluss zwischen den jeweiligen Lagerhälften 105, 107 bzw. 106, 108 kommt und somit ein Verschwenken der Lenkerrohre 90, 91 relativ zu der Befestigungseinrichtung 96 verhindert ist. Im gelösten Zustand des Spannhebels 111, wie in Fig. 14 für den linken Spannhebel dargestellt, können die Lenkerrohre 90, 91 gemeinsam (wegen des Kardangelenks 115) beliebig bezüglich der Befestigungseinrichtung 96 verschwenkt werden.

Vorzugsweise sind die Lagerhälften mit korrespondierenden Eingriffs- bzw. Aufnahmeelementen (beispielhaft mit dem Bezugszeichen 112 für ein vorzugsweise kuchenförmiges Eingriffselement an der Lagerhälfte 107 und entsprechender Ausnehmung 113 in der Lagerhälfte 105 bezeichnet) versehen, mittels derer ein Formschluss zwischen den Lagerhälften 105 und 107 bei geschlossenem Spannhebel 111 bewirkt wird.

Beim Lösen des Spannhebels 111, wie dargestellt in Fig. 14, sorgt eine zwischen den Lagerhälften 105 und 107 angeordnete Druckfeder (nicht dargestellt) dafür, dass sich die Lagerhälften 105 und 107 entgegengesetzt zueinander bewegen, so dass die Eingriffs- und Aufnahmeelemente 112 bzw. 113 aus ihrem Eingriff miteinander kommen und somit ein Verschwenken der Lenkerrohre 90, 91 bezüglich der Befestigungseinrichtung 96 freigeben ist.

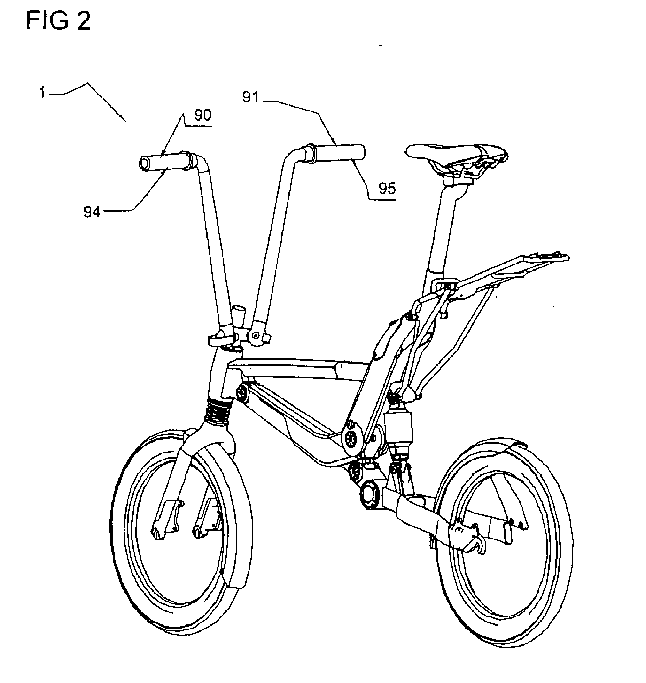

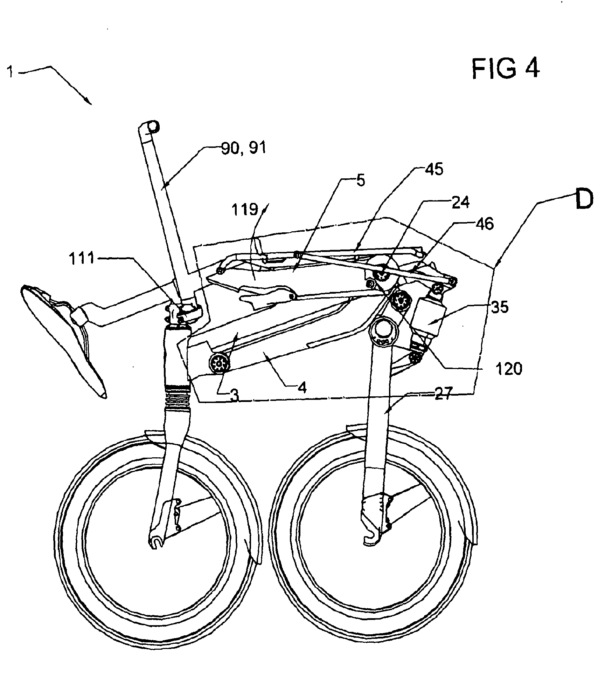

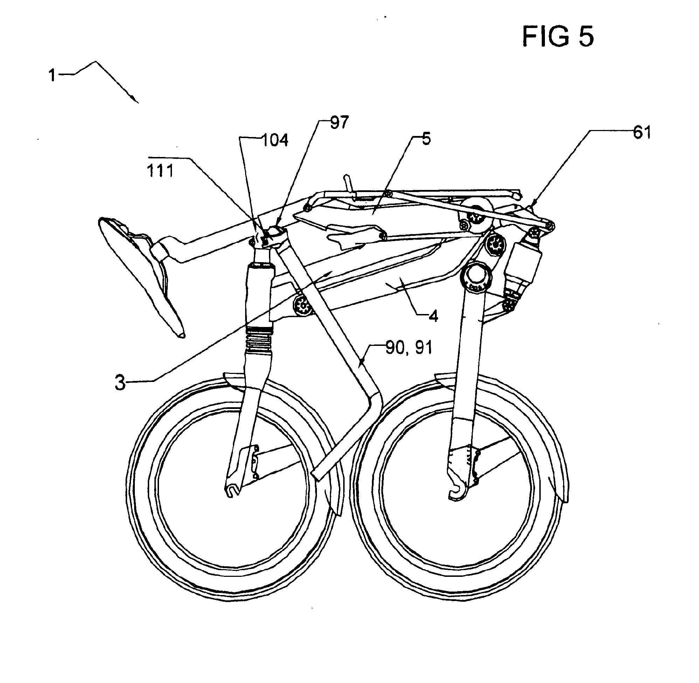

Nachfolgend soll anhand der Fig. 1 bis 12 das Falten des Faltrads 1 von der in Fig. 1 dargestellten Fahrstellung in die in Fig. 4 dargestellte Schiebestellung und weiterhin in die in Fig. 5 dargestellte Verstaustellung näher erläutert werden.

Fig. 1 zeigt die Fahrstellung des Faltrads 1. Dabei ist der Rahmen 2 starr, also formunveränderlich, vorgesehen. Dafür befindet sich das Verbindungselement 51 in der arretierten Stellung: Der Haken 53 hintergreift den Zapfen 54 und verbindet somit das obere Rahmenrohr 3 fest mit der Sattelstrebe 5. Das Hintergreifen des Zapfens 54 in der arretierten Stellung des Verbindungselements 51 ist aus Fig. 8 gut zu erkennen.

In der Fahrstellung kann das Faltrad wie ein gewöhnliches Fahrrad gefahren werden.

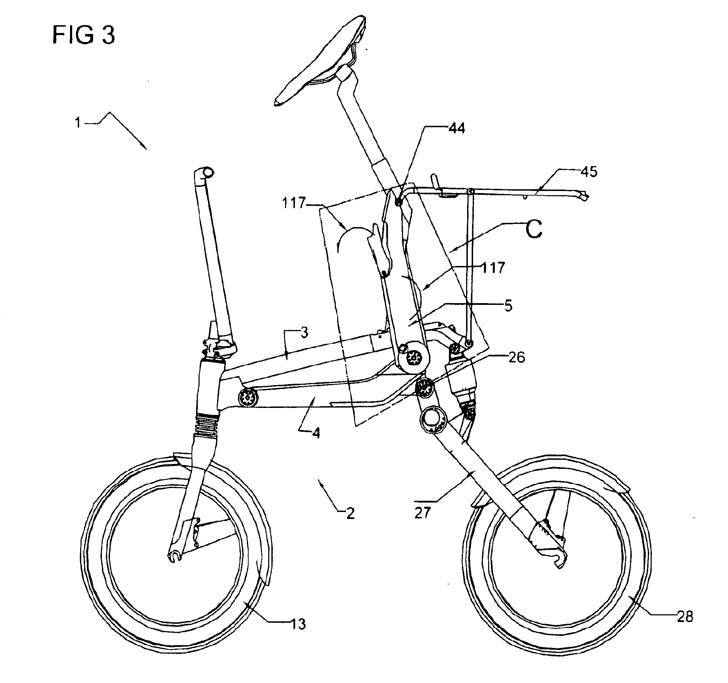

Soll nun das Faltrad 1 von der Fahrstellung in Fig. 1 in die in Fig. 4 dargestellte Schiebestellung verbracht werden, so muss zunächst das arretierte verbindungselement 51 gelöst werden. Dazu verschwenkt ein Benutzer den Griffhebel 53 in die Schwenkrichtung 117, in Fig. 1 und 7 gegen den Uhrzeigersinn, um den Anlenkpunkt 49. Dadurch verschwenkt der Haken 53 ebenfalls um den Anlenkpunkt 49 in der Schwenkrichtung 117 und gibt somit den Zapfen 54 frei. Wird der Griffhebel 52 nun weiterhin in die Schwenkrichtung 117 betätigt, so schlägt der Haken 53 an dem Anschlag 60 (siehe Fig. 9) an. Eine weitere Betätigung des Griffhebels 52 in die Schwenkrichtung 117 führt nun nicht mehr zu einem weiteren Verschwenken desselben, aber zu einem Verschwenken des Endes 38 der Sattelstrebe 5 ebenfalls in der Schwenkrichtung 117, also ebenfalls im Uhrzeigersinn (siehe Fig. 3 und 10), um den Anlenkpunkt 24 bzw. 49 hin zu der oberen Rahmenstrebe 3. Dabei bewegt sich der Anlenkpunkt 26 nach oben, wodurch die Hinterradstrebe 27 samt dem Hinterrad 28 in Richtung Vorderrad 13 bzw. Faltradvorderseite 7 um den Anlenkpunkt 26 verschwenkt. Mit dem Ende 38 verschwenkt auch der Anlenkpunkt 44 des Gepäckträgers 45, wodurch auch dieser in Richtung obere Rahmenstrebe 3 bewegt wird (siehe Fig. 3).

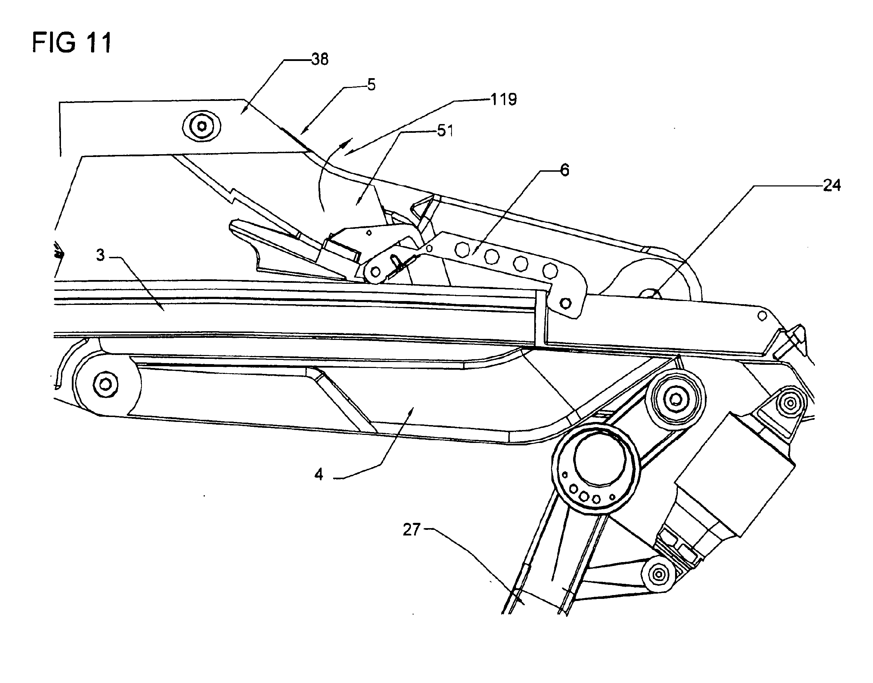

Die verschwenkbewegung endet, wenn die Sattelstrebe 5 im Wesentlichen parallel zu dem oberen Rahmenrohr 3 und abschnittsweise in Anlage zu diesem zum liegen kommt, wie dargestellt in den Fig. 4 und 11. Damit befindet sich das Faltrad 1 in der Schiebestellung, wobei sich die Sattelstrebe 5 bzw. das Sattelrohr (je nach Dimensionierung) zwischen den Lenkerrohren 90, 91 hindurch erstreckt, das Hinterrad 28 benachbart zu dem Vorderrad 13 angeordnet ist und der Gepäckträger 45 auf die Sattelstrebe 5 geklappt ist. In dieser Stellung kann das Faltrad 1 noch tadellos mittels der Lenkerrohre 90, 91 geschoben und manövriert werden, wobei es jedoch bereits erheblich kleinere Dimensionen in der Ebene des Rahmens 2 aufweist.

Vorzugsweise kann ein Mechanismus 120 (s. Fig. 4) vorgesehen sein, mittels welchem der Anlenkpunkt 24 feststellbar ist, derart, dass ein Verschwenken der Sattelstrebe 5 relativ zu der unteren Rahmenstrebe 4 verhindert ist. Somit wird das Faltrad 1 sicher in der Schiebestellung gehalten.

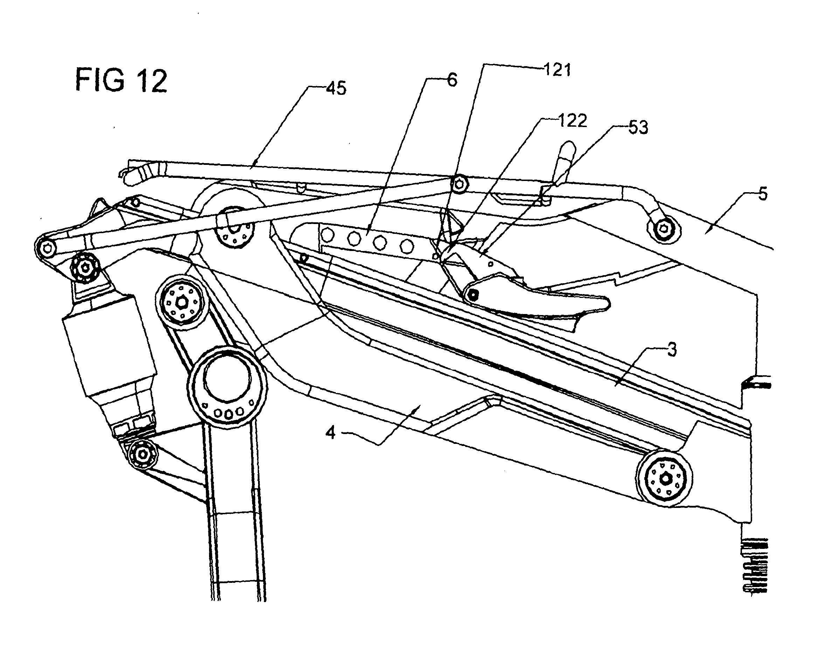

Wie in Fig. 12 zu erkennen, liegt die Spitze 121 des Hakens 53 in der Schiebestellung gegen einen an dem Hebel 6 angeformten Anschlag 122 an und reduziert somit Klappergeräusche.

In der in Fig. 1 bzw. 4 dargestellten Fahrstellung bzw. Schiebestellung erstrecken sich die Griffe 94, 95 der Lenkerrohre 90, 91 im Wesentlichen in einer Ebene senkrecht zur Ebene des Rahmens 2 (nachfolgend als ausgeklappte Stellung der Lenkerrohre bezeichnet).

Soll nun das Faltrad 1 von der Schiebestellung in die Verstaustellung verbracht werden, so löst der Benutzer die Spannhebel 111 und verschenkt wahlweise eines der Lenkerrohre 90 oder 91 aus der ausgeklappte Stellung nach unten, wodurch diese beide zur Ebene des Rahmens 2 hin verschwenken und dann im Wesentliche an diesem anliegen (nachfolgend als angeklappte Stellung der Lenkerrohre bezeichnet). Daraufhin steht es dem Benutzer frei, die Spannhebel 111 wieder zu schließen, sodass die Lenkerrohre 90, 91 in der in Fig. 5 dargestellten angeklappte Stellung festgestellt, also nicht verschwenkbar, sind.

Zum verbringen des Faltrads 1 von der Schiebestellung in die Fahrstellung, wird das Ende 38 in die Schwenkrichtung 119, also gegen den Uhrzeigersinn (s. Fig. 4 und 11), um den Anlenkpunkt 24 verschwenkt. Die Feder 55 (siehe Fig. 7) sorgt dann dafür, dass der Haken 53 in einer derartigen Stellung gehalten wird, dass lediglich die Spitze 121 des Hakens 53 an den Zapfen 54 anschlägt und diese bei Fortführung der Bewegung des Endes 38 in der Schwenkrichtung 119 über den Zapfen 54 schnappt und somit unter den Zapfen 54 greift, also den Zapfen 54 hintergreift, und damit die Fahrstellung gesichert ist. Anschließend, betätigt der Benutzer den Griffhebel 52 ebenfalls in die Schwenkrichtung 119, also in Uhrzeigersinn in Fig. 7, wodurch der Haken 53 den Zapfen 54 vollständig hintergreift, wodurch die Sattelstrebe 5 mit der oberen Rahmenstrebe 3 verspannt wird, und das Faltrad 1 wieder in die Fahrstellung verbracht ist.

Bei dem Ausführungsbeispiel gemäß den Fig. 7 und 9 kann sich Folgendes ergeben: Der Benutzer löst das Verbindungselement 51. Dabei kommt der Haken 53 aus seinem Eingriff mit dem Zapfen 54. Unterlässt es der Benutzer nun, das Ende 38 der Sattelstrebe 5 hin zu der oberen Rahmenstrebe 3 zu verschwenken bzw. die Sattelstrebe 5 zu halten, so kann es beispielsweise auf Grund des Gewichts der Sattelstrebe 5 wieder zu einem Einhaken der Spitze 121 an dem Zapfen 54 kommen. Der Benutzer muss dann zuerst das Verbindungselement 51 wieder betätigen, um ein verschwenken des Endes 38 der Sattelstrebe 5 zu der oberen Rahmenstrebe 3 wieder zu ermöglichen.

Bei dem Ausführungsbeispiel gemäß den Fig. 7a und 9a wird gegenüber dem Ausführungsbeispiel gemäß den Fig. 7 und 9 zusätzlich ein ungewolltes Wiedereinhaken der Spitze 121, wie vorstehend beschrieben, verhindert:

Wird das Verbindungselement 51 gelöst, wodurch der Haken 53 aus seinem Eingriff mit dem Zapfen 54 kommt, bewegt die Feder 133 (siehe Fig. 9a) das Sperrelement 132 in den Weg der Spitze 121 und verhindert somit ein Wiedereinhaken derselben hinter den Zapfen 54, auch wenn kein Verschwenken der Sattelstrebe 5 erfolgt bzw. der Benutzer keine weitere Kraft/Drehmoment auf diese aufbringt. Wird allerdings das obere Ende 38 der Sattelstrebe 5 aus der Schiebestellung in die Fahrstellung verschwenkt, so schnappt die Spitze 121, wie bei dem Ausführungsbeispiel gem. den Fig. 7 und 9, über den Zapfen 54. Dabei wird dann der Sperrhebel 132 in Richtung 134 (s. Fig. 7) gegen die Wirkung der Feder 133 verschwenkt.

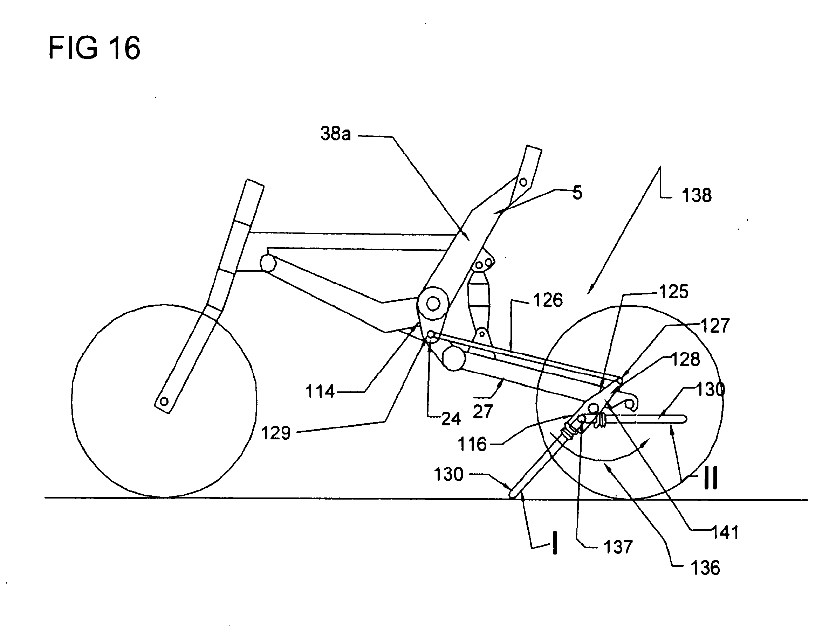

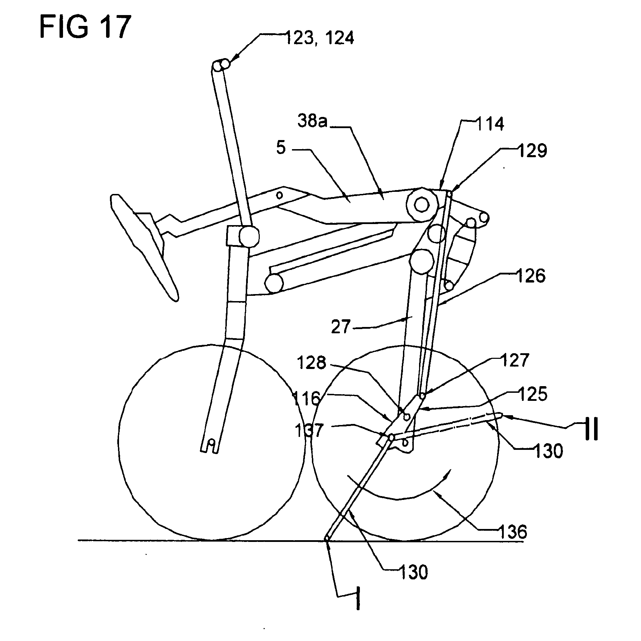

Vorzugsweise ist das Faltrad 1 auch mit einem Ständervorrichtung 138, wie in den Fig. 16 und 17 dargestellt, ausgerüstet.

Das Faltrad 1 weist einen Ständerhalter 125, an welchem ein Ständer 130 um einen Anlenkpunkt 137 zwischen einer ausgeklappten Stellung I für ein Abstützen des Faltrads 1 und einer eingeklappten Stellung II (gestrichelt in Fig. 16 angedeutet) für ein Fahren mit dem Faltrad 1 verschwenkbar angebracht ist. Weiterhin weist das Faltrad 1 eine Ständerstrebe 126 auf.

Der Ständerhalter 125 ist an der Hinterradgabel 27 an einem Anlenkpunkt 128 und die Ständerstrebe 126 an einer Nase 114 an dem unteren Ende 38a der Sattelstrebe 5 an einem Anlenkpunkt 129 und an dem Ständerhalter 125 an einem Anlenkpunkt 127 angelenkt. Der Anlenkpunkte 127 und 137 sind dabei an gegenüberliegenden Enden 116 bzw. 141 des Ständerhalters 125 vorgesehen.

Die Anlenkpunkte 127, 128, 129 sind derart zu einander angeordnet sind, dass der Ständer 130 beim Verbringen des Faltrads 1 zwischen der Fahrstellung und der Schiebestellung in der ausgeklappten Stellung I verbleibt. Der Ständer 130 kann jedoch jederzeit in die einklappte Stellung II mittels Verschwenken in Richtung 136 verbracht werden.

Obwohl die vorliegende Erfindung anhand eines bevorzugten Ausführungsbeispiels vorliegend beschrieben wurde, ist sie darauf nicht beschränkt, sondern auf vielfältige Weise modifizierbar.

### Bezugszeichenliste

- 1: Faltrads
- 2: Rahmen
- 3: obere Rahmenstrebe
- 4: untere Rahmenstrebe
- 5: Sattelstrebe
- 6: Hebel
- 7: Faltradvorderseite
- 8: Faltradrückseite
- 9: Erdboden
- 10: Ende
- 11: Vorderrohr
- 12: Vorderradgabel
- 13: Vorderrad
- 14: Dämpferelement
- 15: Lenkervorrichtung
- 16: Winkel
- 17: Ende
- 18: Anlenkpunkt
- 22: Abschnitt
- 23: Ende
- 24: Anlenkpunkt
- 25: Nase
- 26: Anlenkpunkt
- 27: Hinterradgabel
- 28: Hinterrad
- 32: Aufnahme
- 33: Nase
- 34: Anlenkpunkt
- 35: Hinterradstrebe
- 36: Anlenkpunkt
- 37: Ende
- 38: Ende
- 38a: Ende
- 39: Sattelrohr
- 40: Sattel
- 41: Gabelförmiger Abschnitt
- 42: Stabförmiger Abschnitt
- 44: Anlenkpunkt
- 45: Gepäckträger
- 46: Anlenkpunkt
- 47: Gepäckträgerstützstrebe
- 48: Anlenkpunkt
- 49: Anlenkpunkt
- 50: Anlenkpunkt
- 50a: Ausnehmung
- 50b: Abschnitt
- 50c: Abschnitt
- 50d: Ausnehmung
- 51: Verbindungselement
- 52: Griffhebel
- 53: Haken
- 54: Zapfen
- 55: Zugfeder
- 60: Anschlag
- 61: Aufnahmeelement
- 62: Auflageelement
- 90: Lenkerrohr
- 91: Lenkerrohr
- 92: Abschnitt
- 93: Abschnitt
- 94: Griff
- 95: Griff
- 96: Befestigungseinrichtung
- 97: Drehgelenk
- 98: Drehgelenk
- 102: Arm
- 103: Arm
- 104: Rohrklemme
- 105: Lagerhälfte
- 106: Lagerhälfte
- 107: Lagerhälfte
- 108: Lagerhälfte
- 109: Gelenkzapfen
- 110: Kopf
- 111: Spannhebel
- 112: Eingriffselement
- 113: Aufnahmeelement
- 114: Nase
- 115: Kardangelenk
- 116: Ende
- 117: Schwenkrichtung
- 119: Schwenkrichtung
- 120: Mechanismus
- 121: Spitze
- 122: Anschlag
- 125: Ständerhalter
- 126: Ständerstrebe
- 127: Anlenkpunkt
- 128: Anlenkpunkt
- 129: Anlenkpunkt
- 130: Ständer
- 131: Anlenkpunkt
- 132: Sperrhebel
- 133: Druckfeder
- 134: Schwenkrichtung
- 135: Schwenkrichtung
- 136: Schwenkrichtung
- 137: Anlenkpunkt
- 138: Ständervorrichtung
- 141: Ende

## Patentansprüche

1. Faltrad (1) mit einem Rahmen (2), welcher in seiner Ebene faltbar ist, wobei der Rahmen (2) aufweist:
eine obere Rahmenstrebe (3) mit einem faltradvorderseitigen Ende (10), an welchem eine Vorderradgabel (12) zur Aufnahme eines Vorderrads (13) gelagert ist;
eine Sattelstrebe (5) mit einem Ende (38) zur Aufnahme eines Sattelrohrs (39);
einen Hebel (6), welcher an einem faltradrückseitigen Ende (37) der oberen Rahmenstrebe (3) an einem ersten Anlenkpunkt (50) angelenkt ist, wobei der Hebel (6) bezogen auf die Sattelstrebe (5) in einer Fahrstellung des Faltrads (1) faltradvorderseitig angeordnet ist; und
eine untere Rahmenstrebe (4), welche an dem faltradvorderseitigen Ende (10) der oberen Rahmenstrebe (3) an einem dritten Anlenkpunkt (18) und an einem dem Ende (38) zur Aufnahme der Sattelrohrs (39) gegenüberliegenden Ende (38a) der Sattelstrebe (5) an einem vierten Anlenkpunkt (24) angelenkt ist
**dadurch gekennzeichnet, dass**
der Hebel (6) an dem Ende (38) zur Aufnahme des Sattelrohrs (39) der Sattelstrebe (5) an einem zweiten Anlenkpunkt (49) angelenkt ist,
wobei der erste, zweite, dritte und vierte Anlenkpunkt (50; 49; 18; 24) derart zueinander angeordnet sind,
dass für ein Verbringen des Faltrads (1) aus der Fahrstellung in eine Schiebestellung bzw. aus der Schiebestellung in die Fahrstellung das Ende (38) der Sattelstrebe (5) zur Aufnahme des Sattelrohrs (39) in etwa auf (117) die obere Rahmenstrebe (3) bzw. von der oberen Rahmenstrebe weg (119) verschwenkbar ist.

2. Faltrad nach Anspruch 1,
**dadurch gekennzeichnet,**
**dass** das Faltrad (1) weiterhin eine Hinterradgabel (27) zur Aufnahme eines Hinterrads (28), welche an einem faltradrückseitigen Ende (23) der unteren Rahmenstrebe (4) an einem fünften Anlenkpunkt (26) angelenkt ist, und eine Hinterradstrebe (35) aufweist, welche an dem faltradrückseitigen Ende (37) der oberen Rahmenstrebe (3) an einem sechsten Anlenkpunkt (36) und an der Hinterradgabel (27) an einem siebten Anlenkpunkt (34) angelenkt ist, wobei der erste, zweite, dritte, vierte, fünfte, sechste und siebte Anlenkpunkt (50; 49; 18; 24; 26; 36; 34) derart zueinander angeordnet sind, dass das Hinterrad (28) mittels des Verschwenkens des Endes (38) der Sattelstrebe (5) zur Aufnahme des Sattelrohrs (39) auf (117) die obere Rahmenstrebe (3) bzw. von dieser weg (119) in Richtung Vorderrad (13) bzw. von dem Vorderrad (13) weg verschwenkt.

3. Faltrad nach Anspruch 1 oder 2,
**dadurch gekennzeichnet,**
**dass** die untere Rahmenstrebe (4) einen zur oberen Rahmenstrebe (3) hin abgeknickten Endabschnitt (22) aufweist, an welchem die Sattelstrebe (5) angelenkt ist.

4. Faltrad nach Anspruch 3,
**dadurch gekennzeichnet,**
**dass** von dem abgeknickten Endabschnitt (22) eine Nase (25) absteht, an welcher die Hinterradgabel (27) angelenkt ist.

5. Faltrad nach wenigstens einem der vorhergehenden Ansprüche,
**dadurch gekennzeichnet,**
**dass** die Sattelstrebe (5) einen gabelförmigen Abschnitt (41) aufweist, durch welchen sich die obere Rahmenstrebe (3) erstreckt.

6. Faltrad nach wenigstens einem der vorhergehenden Ansprüche,
**dadurch gekennzeichnet,**
**dass** die obere Rahmenstrebe (3) eine Ausnehmung (50a) aufweist, in welcher der Hebel (6) in der Fahrstellung des Faltrads (1) versenkt ist.

7. Faltrad nach wenigstens einem der vorhergehenden Ansprüche,
**dadurch gekennzeichnet,**
**dass** die Sattelstrebe (5) ein Auflageelement (62) und die obere Rahmenstrebe (3) ein Aufnahmeelement (61) aufweist, welche in der Fahrstellung des Faltrads (1) in einer Ebene im wesentlichen senkrecht zur Sattelstrebe (5) einen Formschluss bilden.

8. Faltrad nach Anspruch 7,
**dadurch gekennzeichnet,**
**dass** das Auflageelement (62) hohlkonusförmig und das Aufnahmeelement (61) konusförmig ausgebildet sind und in der Fahrstellung des Faltrads (1) ineinander greifen.

9. Faltrad nach wenigstens einem der vorhergehenden Ansprüche,
**dadurch gekennzeichnet,**
**dass** das Faltrad (1) einen Gepäckträger (45) und wenigstens eine Gepäckträger-Stützstrebe (47) aufweist, wobei der Gepäckträger (45) an der Sattelstrebe (5) an einem achten Anlenkpunkt (44) und die Gepäckträger-Stützstrebe (47) an dem Ende (37) des oberen Rahmenrohrs (3) an einem neunten Anlenkpunkt (48) und an dem Gepäckträger (45) an einem zehnten Anlenkpunkt (46) angelenkt ist, wobei der achte, neunte und zehnte Anlenkpunkt (44; 48; 46) derart zueinander angeordnet sind, dass der Gepäckträger in der Fahrstellung und in der Schiebestellung eine im Wesentlichen waagrechte oder in Richtung Faltradrückseite (8) nach oben ansteigende Stellung aufweist.

10. Faltrad nach wenigstens einem der vorhergehenden Ansprüche,
**dadurch gekennzeichnet,**
**dass** die Sattelstrebe (5) mittels Arretieren eines an der Sattelstrebe (5) angebrachten verbindungselements (51) mit der oberen Rahmenstrebe (3) für die Fahrstellung des Faltrads (1) fest verbindbar ist und dass die Sattelstrebe (5) mittels Lösen des verbindungselements (51) für ein verschwenken der Sattelstrebe (5) in einer ersten Schwenkrichtung (117) relativ zu der oberen Rahmenstrebe (3) in der Ebene des Rahmens (2) für die Schiebestellung des Faltrads (1) freigebbar ist.

11. Faltrad nach Anspruch 10,
**dadurch gekennzeichnet,**
**dass** das Verbindungselement (51) einen Griffhebel (52),
welcher an der Sattelstrebe (5) angelenkt ist, und einen sich an den Griffhebel (52) anschließenden Haken (53) aufweist, wobei der Haken (53) zum Arretieren des Verbindungselements (51) einen an der oberen Rahmenstrebe (3) angebrachten Zapfen (54) mittels Verschwenken des Hakens (53) in einer zweiten Schwenkrichtung (119) hintergreift und den Zapfen (54) zum Lösen des Verbindungselements (51) mittels Verschwenken des Hakens (53) in der ersten Schwenkrichtung (117) freigibt.

12. Faltrad nach Anspruch 11,
**dadurch gekennzeichnet,**
**dass** der Griffhebel (52), Haken (53) und Zapfen (54) zusammen einen Über-Totpunkt-Mechanismus ausbilden.

13. Faltrad nach Anspruch 11 oder 12,
**dadurch gekennzeichnet,**
**dass** eine Feder (55) vorgesehen ist, welche den Haken (53) in der ersten Schwenkrichtung (117) vorspannt.

14. Faltrad nach wenigstens einem der Ansprüche 11 bis 13,
**dadurch gekennzeichnet,**
**dass** die Sattelstrebe (5) einen Anschlag (60) aufweist, an welchen das gelöste Verbindungselement (51) in der ersten Schwenkrichtung (117) anschlägt.

15. Faltrad nach wenigstens einem der vorhergehenden Ansprüche,
**dadurch gekennzeichnet,**
**dass** das Faltrad (1) mit einer Lenkervorrichtung (15) vorgesehen ist, welche eine Befestigungseinrichtung (96), mittels welcher die Lenkervorrichtung (15) an der Vorderradgabel (12) lösbar befestigt ist, und zwei Lenkerrohre (90, 91) aufweist, welche jeweils an der Befestigungseinrichtung (96) zwischen der Fahrstellung und einer ersten Verstaustellung des Faltrads (1) und zwischen der Schiebestellung und einer zweiten Verstaustellung des Faltrads (1) mittels eines Drehgelenks (97, 98) verschwenkbar angebracht sind.

16. Faltrad nach Anspruch 15,
**dadurch gekennzeichnet,**
**dass** jedes der Drehgelenke (97, 98) eine an dem Lenkerrohr (90; 91) angebrachte Lagerhälfte (107; 108), eine an der Befestigungseinrichtung (96) angebrachte Lagerhälfte (105; 106) und einen diese lagernden Gelenkzapfen (109) aufweist, wobei die Lagerhälften (105, 107; 106, 108) formschlüssig und/oder reibschlüssig für die Fahr-stellung, Schiebestellung, erste und/oder zweite Verstaustellung miteinander koppelbar sind.

17. Faltrad nach Anspruch 16,
**dadurch gekennzeichnet,**
**dass** ein Schnellspanner (110, 111) vorgesehen ist, welcher den Gelenkzapfen (109) aufweist und mittels welchem die Lagerhälften (105, 107; 106, 108) aneinander anpressbar sind.

18. Faltrad nach Anspruch 16 oder 17,
**dadurch gekennzeichnet,**
**dass** die Lagerhälften (105, 107; 106, 108) korrespondierende Aufnahme- und Eingriffselemente (113; 112) aufweisen.

19. Faltrad nach wenigstens einem der Ansprüche 16 bis 18,
**dadurch gekennzeichnet,**
**dass** die an den Lenkerrohren (90, 91) angebrachten Lagerhälften (107, 108) mittels eines Kardangelenks (115) miteinander gekoppelt sind.

20. Faltrad nach wenigstens einem der Ansprüche 15 bis 19,
**dadurch gekennzeichnet,**
**dass** sich Griffe (94, 95) der Lenkerrohre (90, 91) in der Fahr- und Schiebestellung im Wesentlichen senkrecht zur Ebene des Rahmens (2) erstrecken und in der ersten und zweiten Verstaustellung im Wesentlichen in der Ebene des Rahmens (2) erstrecken.

21. Faltrad nach wenigstens einem der vorhergehenden Ansprüche,
**dadurch gekennzeichnet,**
**dass** das Faltrad (1) einen Ständerhalter (125), an welchem ein Ständer (130) zwischen einer ausgeklappten Stellung für ein Abstützen des Faltrads (1) und einer eingeklappten Stellung für ein Fahren mit dem Faltrad (1) verschwenkbar angebracht ist, und eine Ständerstrebe (126) aufweist, wobei der Ständerhalter (125) an der Hinterradgabel (27) an einem elften Anlenkpunkt (128) und die Ständerstrebe (126) an dem unteren Ende (38a) der Sattelstrebe (5) an einem zwölften Anlenkpunkt (129) und an dem Ständerhalter (125) an einem dreizehnten Anlenkpunkt (127) angelenkt ist, wobei der elfte, zwölfte und dreizehnte Anlenkpunkt (127, 128, 129) derart zu einander angeordnet sind, dass der Ständer (130) beim Verbringen des Faltrads (1) zwischen der Fahrstellung und der Schiebestellung in der ausgeklappten Stellung verbleibt.

## Claims

1. Folding bicycle (1) having a frame (2) which is foldable in its plane, the frame (2) comprising:
an upper frame strut (3) having a folding bicycle front side end (10) on which a front wheel fork (12) is mounted for receiving a front wheel (13),
a seat strut (5) having an end (38) for receiving a seat tube (39);
a lever (6) being articulated at a folding bicycle rear side end (37) of the upper frame strut (3) at a first articulation point (50), the lever (6) being arranged in relation to the seat strut (5) on a folding bicycle front side in a riding position of the folding bicycle (1), and
a lower frame strut (4) being articulated at the folding bicycle front side end (10) of the upper frame strut (3) at a third articulation point (18), and at an end (38a) of the seat strut (5) opposing the end (38) for receiving the seat tube (39) at a fourth articulation point (24),
**characterised in that**
the lever (6) is articulated at a second articulation point (49) at the end (38) for receiving the seat tube (39) of the seat strut (5),
wherein the first, second, third and fourth articulation points (50, 49, 18, 24) are arranged with respect to each other in such a manner that, for bringing the folding bicycle (1) from the riding position into a pushing position or from the pushing position into the riding position, the end (38) of the seat strut (5) for receiving the seat tube (39) is approximately pivotable in a direction towards (117) the upper frame strut (3) and/or in direction away (119) from the upper frame strut.

2. Folding bicycle according to claim 1,
**characterised in that**
the folding bicycle (1) further comprises a rear wheel fork (27) for receiving a rear wheel (28), which is articulated at a folding bicycle rear side end (23) of the lower frame strut (4) at a fifth articulation point (26), and a rear wheel strut (35) being articulated at the folding bicycle rear side end (37) of the upper frame strut (3) at a sixth articulation point (36) and at the rear wheel fork (27) at a seventh articulation point (34), wherein the first, second, third, fourth, fifth, sixth and seventh articulation points (50, 49, 18, 24, 26, 36, 34) are arranged with respect to each other in such a manner that the rear wheel (28) pivots by means of the pivoting of the end (38) of the seat strut (5) for receiving the seat tube (39) in direction to (117) the upper frame strut (3) and/or away (119) from the same in a direction towards the front wheel (13) and/or away from the front wheel (13).

3. Folding bicycle according to claim 1 or 2,
**characterised in that**
the lower frame tube (4) comprises an end portion (22) bent towards the upper frame strut (3), at which the seat strut (5) is articulated.

4. Folding bicycle according to claim 3,
**characterised in that**
a nose (25) protrudes from the bent end portion (22), at which the rear wheel fork (27) is articulated.

5. Folding bicycle according to at least one of the preceding claims,
**characterised in that**
the seat strut (5) comprises a fork-shaped portion (41) through which the upper frame strut (3) extends.

6. Folding bicycle according to at least one of the preceding claims,
**characterised in that**
the upper frame strut (3) comprises a recess (50a) in which the lever (6) is embedded in the riding position of the folding bicycle (1).

7. Folding bicycle according to at least one of the preceding claims,
**characterised in that**
the seat strut (5) comprises a resting member (62) and the upper frame strut (3) comprises a receiving member (61), which in the riding position of the folding bicycle (1) are form-fit in a plane substantially perpendicular to the seat strut (5).

8. Folding bicycle according to claim 7,
**characterised in that**
the resting member (62) is formed to be hollow-cone shaped and the receiving member (61) is formed to be cone shaped and that they are engaged in the riding position of the folding bicycle (1).

9. Folding bicycle according to one of the preceding claims,
**characterised in that**
the folding bicycle (1) comprises a carrier (45) and at least one carrier support strut (47), wherein the carrier (45) is articulated at the seat strut (5) at an eighth articulation point (44) and the carrier support strut (47) is articulated at the end (37) of the upper frame tube (3) at a ninth articulation point (48) and at the carrier (45) at a tenth articulation point (46), wherein the eighth, ninth and tenth articulation points (44, 48, 46) are arranged with respect to each other in such a manner that the carrier comprises in the riding position and in the pushing position a position substantially horizontal or rising upwards in a direction towards the folding bicycle rear side (8).

10. Folding bicycle according to at least one of the preceding claims,
**characterised in that**
the seat strut (5) can firmly be connected to the upper frame strut (3) for the riding position of the folding bicycle (1) by means of locking a connecting member (51) attached to the seat strut (5), and that the seat strut (5) can be released for pivoting the seat strut (5) in a first pivot direction (117) relative to the upper frame strut (3) in the plane of the frame (2) for the pushing position of the folding bicycle (1) by means of unlocking the connecting member (51).

11. Folding bicycle according to claim 10,
**characterised in that**
the connecting member (51) comprises a handle lever (52) which is articulated at the seat strut (5) and a hook (53) connecting to the handle lever (52), wherein the hook (53) engages behind a pin (54) attached to the upper frame strut (3) by means of pivoting the hook (53) in a second pivot direction (119) for locking the connecting member (51), and releases the pin (54) by means of pivoting the hook (53) in the first pivot direction (117) for unlocking the connecting member (51).

12. Folding bicycle according to claim 11,
**characterised in that**
the handle lever (52), the hook (53) and the pin (54) together form a beyond dead centre mechanism.

13. Folding bicycle according to claim 11 or 12,
**characterised in that**
a spring (55) is provided which pre-stresses the hook (53) in the first pivot direction (117).

14. Folding bicycle according to at least one of claims 11 to 13,
**characterised in that**
the seat strut (5) comprises a stop (60) against which the unlocked connecting member (51) strikes in the first pivot direction (117).

15. Folding bicycle according to at least one of the preceding claims,
**characterised in that**
the folding bicycle (1) is provided with a handle bar device (15) comprising a fastening device (96) by means of which the handle bar device (15) is releasably fastened to the front wheel fork (12), and two handle bar tubes (90, 91) respectively attached to the fastening device (96) to be pivotable by means of a hinge (97, 98) between the riding position and a first storing position of the folding bicycle and between the pushing position and a second storing position of the folding bicycle (1).

16. Folding bicycle according to claim 15,
**characterised in that**
each of the hinges (97, 98) comprises a bearing half (107, 108) attached to the handle bar tube (90, 91), a bearing half (105, 106) attached to the fastening device (96), and a pivot pin (109) bearing the same, wherein the bearing halves (105, 107, 106, 108) can be coupled to each other in a form-fit and/or frictionally engaged manner for the riding position, the pushing position, the first and/or second storing positions.

17. Folding bicycle according to claim 16,
**characterised in that**
a quick release (110, 111) is provided, which comprises the pivot pin (109) and by means of which the bearing halves (105, 107, 106, 108) can be pressed against each other.

18. Folding bicycle according to claim 16 or 17,
**characterised in that**
the bearing halves (105, 107, 106, 108) comprise corresponding receiving and engaging members (113, 112).

19. Folding bicycle according to at least one of claims 16 to 18,
**characterised in that**
the bearing halves (107, 108) attached to the handle bar tubes (90, 91) are coupled to each other by means of a cardan joint (115).

20. Folding bicycle according to at least one of claims 15 to 19,
**characterised in that**
the handles (94, 95) of the handle bar tubes (90, 91) in the driving and pushing positions extend substantially perpendicularly to the plane of the frame (2) and in the first and second storing positions extend substantially in the plane of the frame (2).

21. Folding bicycle according to at least one of the preceding claims,
**characterised in that**
the folding bike (1) comprises a stand holder (125) to which a stand (130) is attached to be pivotable between an extended position for supporting the folding bicycle (1) and a retracted position for riding the folding bicycle (1), and a stand strut (126), wherein the stand holder (125) is articulated at the rear wheel fork (27) at an eleventh articulation point (128) and the stand strut (126) is articulated at the lower end (38a) of the seat strut (5) at a twelfth articulation point (129) and at the stand strut (125) at a thirteenth articulation point (127), wherein the eleventh, twelfth and thirteenth articulation points (127, 128, 129) are arranged relative to each other in such a manner that the stand (130) remains in the extended position when moving the folding bicycle (1) between the riding position and the pushing position.

## Revendications

1. Vélo pliant (1) ayant un châssis (2), qui peut être replié dans son plan, dans lequel le châssis (2) présente :
un étai de châssis supérieur (3) avec une extrémité (10), côté avant du vélo pliant, sur laquelle est montée une fourche de roue avant (12) pour recevoir une roue avant (13) ;
un étai de selle (5) avec une extrémité (38) pour recevoir un tube de selle (39) ;
un levier (6), qui est articulé à une extrémité (37), côté arrière du vélo pliant, de l'étai supérieur (3) du châssis sur un premier point d'articulation (50), dans lequel le levier (6) est disposé côté avant du vélo pliant par rapport à l'étai de selle (5) dans une position de roulement du vélo pliant (1) ; et
un étai de châssis inférieur (4), qui est articulé à l'extrémité (10), côté avant du vélo pliant, de l'étai de châssis supérieur (3) sur un troisième point d'articulation (18), et à une extrémité (38a), en regard de l'extrémité (38) pour la réception du tube de selle (39), de l'étai de selle (5) sur un quatrième point d'articulation (24),
**caractérisé en ce que**
le levier (6) est articulé à l'extrémité (38) pour recevoir le tube de selle (39) de l'étai de selle (5) sur un deuxième point d'articulation (49),
dans lequel les premier, deuxième, troisième et quatrième points d'articulation (50 ; 49 ; 18 ; 24) sont aménagés l'un par rapport à l'autre de sorte que, pour faire passer le vélo pliant (1) de la position de roulement dans une position de coulissement ou de la position de coulissement dans la position de roulement, l'extrémité (38) de l'étai de selle (5) pour recevoir le tube de selle (39) peut pivoter pour s'appliquer (117) à peu près sur l'étai de châssis supérieur (3) ou s'écarter (119) de l'étai de châssis supérieur.

2. Vélo pliant selon la revendication 1,
**caractérisé en ce que**
le vélo pliant (1) présente en outre une fourche de roue arrière (27) pour recevoir une roue arrière (28), qui est articulée à une extrémité (23), côté arrière du vélo pliant, de l'étai de châssis inférieur (4) sur un cinquième point d'articulation (26), et un étai de roue arrière (35), qui est articulé à l'extrémité (37), côté arrière du vélo pliant, de l'étai de châssis supérieur (3) sur un sixième point d'articulation (36), et à la fourche de roue arrière (27) sur un septième point d'articulation (34), dans lequel les premier, deuxième, troisième, quatrième, cinquième, sixième et septième points d'articulation (50 ; 49 ; 18 ; 24 ; 26 ; 36 ; 34) sont aménagés l'un par rapport à l'autre de sorte que la roue arrière (28), par pivotement de l'extrémité (38) de l'étai de selle (5) pour recevoir le tube de selle (39) sur (117) ou à l'écart de (119) l'étai de châssis supérieur (3), pivote dans la direction de la roue avant (13) ou à l'opposé de la roue avant (13).

3. Vélo pliant selon la revendication 1 ou 2,
**caractérisé en ce que**
l'étai de châssis inférieur (4) présente un segment d'extrémité (22) coudé vers l'étai de châssis supérieur (3), sur lequel segment l'étai de selle (5) est articulé.

4. Vélo pliant selon la revendication 3,
**caractérisé en ce que**
un talon (25), sur lequel la fourche de roue arrière (27) est articulée, s'écarte du segment d'extrémité coudé (22).

5. Vélo pliant selon au moins l'une quelconque des revendications précédentes,
**caractérisé en ce que**
l'étai de selle (5) présente un segment (41) en forme de fourche à travers lequel l'étai de châssis supérieur (3) s'étend.

6. Vélo pliant selon au moins l'une quelconque des revendications précédentes,
**caractérisé en ce que**
l'étai de châssis supérieur (3) présente un évidement (50a) dans lequel le levier (6) est enfoncé en position de roulement du vélo pliant (1).

7. Vélo pliant selon au moins l'une quelconque des revendications précédentes,
**caractérisé en ce que**
l'étai de selle (5) présente un élément d'appui (62) et l'étai de châssis supérieur (3) un élément récepteur (61) qui assurent un ajustement de forme dans la position de roulement du vélo pliant (1) dans un plan sensiblement perpendiculairement à l'étai de selle (5).

8. Vélo pliant selon la revendication 7,
**caractérisé en ce que**
l'élément d'appui (62) est conformé en cône creux et l'élément récepteur (61) est conformé en cône et ils s'emboîtent l'un dans l'autre dans la position de roulement du vélo pliant (1).

9. Vélo pliant selon au moins l'une quelconque des revendications précédentes,
**caractérisé en ce que**
le vélo pliant (1) présente un porte-bagages (45) et au moins un étai d'appui (47) du porte-bagages, dans lequel le porte-bagages (45) est articulé à l'étai de selle (5) sur un huitième point d'articulation (44) et l'étai d'appui (47) du porte-bagages est articulé à l'extrémité (37) du tube de châssis supérieur (3) sur un neuvième point d'articulation (48) et au porte-bagages (45) sur un dixième point d'articulation (46), dans lequel les huitième, neuvième et dixième points d'articulation (44 ; 48 ; 46) sont aménagés l'un par rapport à l'autre de sorte que le porte-bagages présente, dans la position de roulement et dans la position de coulissement, une position sensiblement horizontale ou une position grimpant dans la direction du côté arrière (8) du vélo pliant.

10. Vélo pliant selon au moins l'une quelconque des revendications précédentes,
**caractérisé en ce que**
l'étai de selle (5) peut, par blocage d'un élément de raccordement (51) monté sur l'étai de selle (5), être fixé à l'étai de châssis supérieur (3) pour la position de roulement du vélo pliant (1) et l'étai de selle (5) peut être libéré, par
dégagement de l'élément de raccordement (51) pour un pivotement de l'étai de selle (5) dans un premier sens de pivotement (117) par rapport à l'étai de châssis supérieur (3) dans le plan du châssis (2) pour la position de coulissement du vélo pliant (1).

11. Vélo pliant selon la revendication 10,
**caractérisé en ce que**
l'élément de raccordement (51) présente un levier de préhension (52), qui est articulé sur l'étai de selle (5), et un crochet (53) se raccordant au levier de préhension (52), dans lequel le crochet (53), pour bloquer l'élément de raccordement (51), accroche un tenon (54) monté sur l'étai de châssis supérieur (3) par pivotement du crochet (53) dans un deuxième sens de pivotement (119) et libère le tenon (54) pour dégager l'élément de raccordement (51) par pivotement du crochet (53) dans le premier sens de pivotement (117).

12. Vélo pliant selon la revendication 11,
**caractérisé en ce que**
le levier de préhension (52), le crochet (53) et le tenon (54) forment conjointement un mécanisme à point mort haut.

13. Vélo pliant selon la revendication 11 ou 12,
**caractérisé en ce que**
il est prévu un ressort (55), qui précontraint le crochet (53) dans le premier sens de pivotement (117).

14. Vélo pliant selon au moins l'une quelconque des revendications 11 à 13,
**caractérisé en ce que**
l'étai de selle (5) présente une butée (60) sur laquelle butte l'élément de raccordement dégagé (51) dans le premier sens de pivotement (117).

15. Vélo pliant selon au moins l'une quelconque des revendications précédentes,
**caractérisé en ce que**
le vélo pliant (1) est pourvu d'un dispositif directeur (15) qui présente un dispositif de fixation (96), à l'aide duquel le dispositif directeur (15) est fixé de manière amovible à la fourche de roue avant (12), et deux barres directrices (90, 91), qui sont montées à pivotement respectivement sur le dispositif de fixation (96) entre la position de roulement et une première position d'arrimage du vélo pliant (1) et entre la position de coulissement et une seconde position d'arrimage du vélo pliant (1) au moyen d'une genouillère (97, 98).

16. Vélo pliant selon la revendication 15,
**caractérisé en ce que**
chacune des genouillères (97, 98) présente une moitié de palier (108 ; 108) montée sur la barre directrice (90 ; 91), une moitié de palier (105 ; 106) montée sur le dispositif de fixation (96) et un pivot (109) sur lequel sont montées celles-ci, dans lequel les moitiés de palier (105, 107 ; 106, 108) peuvent être couplées l'une à l'autre par adaptation de formes et/ou par entraînement par friction pour la position de roulement, la position de coulissement, le première et/ou la seconde position(s) d'arrimage.

17. Vélo pliant selon la revendication 16,
**caractérisé en ce que**
il est prévu un dispositif de serrage rapide (110, 111) qui comprend le pivot (109) et au moyen duquel les moitiés de palier (105, 107 ; 106, 108) peuvent être pressées l'une sur l'autre.

18. Vélo pliant selon la revendication 16 ou 17,
**caractérisé en ce que**
les moitiés de palier (105, 107 ; 106, 108) présentent des éléments de réception et de dégagement correspondants (113 ; 112).

19. Vélo pliant selon au moins l'une quelconque des revendications 16 à 18,
**caractérisé en ce que**
les moitiés de palier (107, 108) montées sur les barres directrices (90, 91) sont couplées l'une à l'autre au moyen d'un joint de cardan (115).

20. Vélo pliant selon au moins l'une quelconque des revendications 15 à 19,
**caractérisé en ce que**
les poignées (94, 95) des barres directrices (90, 91) s'étendent, dans la position de roulement et la position de coulissement, sensiblement perpendiculairement au plan du châssis (2) et, dans la première position et la seconde position d'arrimage, sensiblement dans le plan du châssis (2).

21. Vélo pliant selon au moins l'une quelconque des revendications précédentes,
**caractérisé en ce que**
le vélo pliant (1) présente un porte-béquille (125), sur lequel est montée à pivotement une béquille (130) entre une position déployée pour permettre un appui du vélo pliant (1) et une position escamotée pour un roulement avec le vélo pliant (1), et un étai de béquille (126), dans lequel le porte-béquille (125 est articulé à la fourche de roue arrière (27) sur un onzième point d'articulation (128) et l'étai de béquille (126) est articulé à l'extrémité inférieure (38a) de l'étai de selle (5) sur un douzième point d'articulation (129) et au porte-béquille (125) sur un treizième point d'articulation (127), dans lequel les onzième, douzième et treizième points d'articulation (127, 128, 129) sont aménagés l'un par rapport à l'autre de sorte que la béquille (130) reste dans la position déployée lors du passage du vélo pliant (1) entre la position de roulement et la position de coulissement.
